# EUROPÄISCHE PATENTANMELDUNG

(11) **EP 1 125 957 A2**
(43) Veröffentlichungstag der Anmeldung: **22.08.2001**
(21) Anmeldenummer: 01102778.6
(22) Anmeldetag: 08.02.2001
(51) Int. Cl.: C08G 18/08, C08G 18/38

(54) **Sulfonsäureverbindungen, Verfahren zu deren Herstellung und deren Verwendung**

(30) Priorität: 09.02.2000 DE 10005650; 09.02.2000 DE 10005648
(71) Anmelder: BASF AKTIENGESELLSCHAFT, 67056 Ludwigshafen (DE)
(72) Erfinder: Blum, Rainer, 67069 Ludwigshafen (DE); Hees, Ulrike, 68167 Mannheim (DE); Raether, Roman B. Dr., 67117 Limburgerhof (DE)
(74) Vertreter: Isenbruck, Günter, Dr.

(57) **Zusammenfassung**

Die Erfindung betrifft eine Sulfonsäureverbindung der allgemeinen Formel I 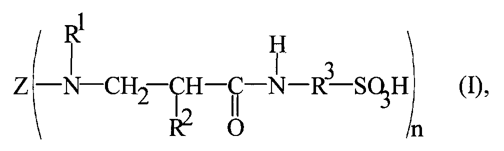 worin n für eine Zahl von 1 bis 1.000.000, mindestens einer der Reste R¹ für R⁴-QH, R⁴-Q-(X-O-)ₘX-QH oder R⁴-O-Y-QH und m für einen Wert von 1 bis 300 steht, die Reste R² unabhängig voneinander jeweils für H oder einen linearen oder verzweigten, gesättigten oder ungesättigten aliphatischen Kohlenwasserstoffrest, einen gesättigten oder ungesättigten, gegebenenfalls substituierten cycloaliphatischen Kohlenwasserstoffrest, einen gegebenenfalls substituierten aliphatischen Kohlenwasserstoffrest oder einen gegebenenfalls substituierten aromatischen Kohlenwasserstoffrest, die Reste R³ für einen linearen oder verzweigten, gesättigten oder ungesättigten Alkylrest oder Cycloalkylrest stehen, Z für einen linearen oder verzweigten, gesättigten oder ungesättigten gegebenenfalls substituierten Alkylrest, einen Cycloalkylrest, einen araliphatischen Kohlenwasserstoffrest oder einen Polyether, einen Polyester, ein Polyamid, ein Polycarbonat, ein Polyurethan oder ein Polylacton steht, wobei Z über geeignete funktionelle Gruppen mit dem Gesamtmolekül verbunden ist, oder ein Teil- oder Vollsalz davon, deren Herstellung und Verwendung.

## Beschreibung

Die Erfindung betrifft eine Sulfonsäureverbindung der allgemeinen Formel I 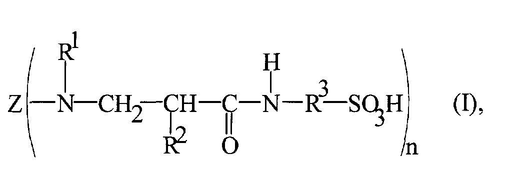 worin n für eine Zahl von größer als 1 bis 2, oder gleich 1, oder mehr als 2 bis 1000000, mindestens einer der Reste R¹ für R⁴-QH, R⁴-Q-(X-O-)ₘX-QH oder R⁴-O-Y-QH steht, wobei Q für O, NH, NR² oder S, R⁴ für einen linearen oder verzweigten, gesättigten oder ungesättigten Alkylrest mit 2 bis 44 C-Atomen, X für einen gegebenenfalls substituierten Alkylrest mit 2 bis 40 C-Atomen, Y für ein durch Polymerisation, Polyaddition oder Polykondensation erhältliches Polymer mit einem Molekulargewicht M_{w} von 150 bis 5000 und m für einen Wert von 1 bis 300 steht, wobei bei n>2 R¹ auch für H, CH₃, einen linearen oder verzweigten, gesättigten oder ungesättigten Alkylrest mit 2 bis 44 C-Atomen oder einen Cykloalkylrest mit 4 bis 44 C-Atomen oder einen aromatischen Kohlenwasserstoffrest mit 6 bis 10 C-Atomen stehen kann, die Reste R² unabhängig voneinander jeweils für einen linearen oder verzweigten, gesättigten oder ungesättigten aliphatischen Kohlenwasserstoffrest mit 1 bis 20 C-Atomen oder einen cycloaliphatischen Kohlenwasserstoffrest mit 4 bis 20 C-Atomen oder einen gegebenenfalls substituierten aromatischen Kohlenwasserstoffrest mit 6 bis 18 C-Atomen, die Reste R³ für einen linearen oder verzweigten, gesättigten oder ungesättigten Alkylrest mit 2 bis 44 C-Atomen oder einen gesättigten oder ungesättigten Cycloalkylrest mit 6 bis 44 C-Atomen stehen, Z, falls n>1 ist, für einen linearen oder verzweigten, gesättigten oder ungesättigten gegebenenfalls substituierten Alkylrest mit 8 bis 44 C-Atomen, einen gegebenenfalls substituierten Cycloalkylrest mit 4 bis 44 C-Atomen, einen gegebenenfalls substituierten araliphatischen Kohlenwasserstoffrest mit 6 bis 40 C-Atomen oder einen Polyether, einen Polyester, ein Polyamid, ein Polycarbonat, ein Polyurethan oder ein Polylacton mit einem Molekulargewicht M_{w} von 150 bis 10000, wobei Z über geeignete funktionelle Gruppen mit dem Gesamtmolekül verbunden ist, steht, und falls n=1 ist, R¹ und Z jeweils unabhängig voneinander für R⁴-QH, R⁴-Q-(X-O-)ₘX-QH oder R⁴-O-Y-Q- stehen, wobei Q für O, NH, NR⁴ oder S, R⁴ für einen linearen oder verzweigten, gesättigten oder ungesättigten, gegebenenfalls aromatisch substituierten Alkylrest mit 2 bis 44 C-Atomen, X für einen Alkylrest mit 2 bis 10 C-Atomen, Y für ein durch Polymerisation, Polyaddition oder Polykondensation erhältliches Polymeres mit einem Molekulargewicht M_{w} von 150 bis 5000 und m für einen Wert von 1 bis 300 steht und wobei nicht beide Reste R¹ und Z gleichzeitig für CH₂-CH₂-OH stehen, oder ein Teil- oder Vollsalz davon.

Sulfonsäuregruppenhaltige Verbindungen, beispielsweise Polymere, weisen ein breites Spektrum an Anwendungsmöglichkeiten auf. Sie werden in der organischen Chemie sowie in der Polymerchemie insbesondere dann eingesetzt, wenn die verwendeten Verbindungen besondere Dispersionseigenschaften aufweisen sollen, da die Sulfonsäuregruppe für ihre ausgezeichnete Dispergierwirkung bekannt ist. Häufig stellt es sich jedoch als problematisch dar, eine einfache Verfahrensweise zur Einbindung von Sulfonsäuregruppe in Polymere zur Verfügung zu stellen, die insbesondere gewährleistet, daß die im Polymeren eingebundene Sulfonsäuregruppe die gewünschten Eigenschaften möglichst optimal und maßgeschneidert erfüllt.

So beschreibt beispielsweise die US-A 5,695,884 ein thermoplastisches Polyurethan, das mindestens eine Sulfonatgruppe aufweist. Die Sulfonatgruppe wird in das Polyurethan über ein entsprechendes, sulfonatgruppenhaltiges Polyesterpolyol eingebracht, wobei die Sulfonsäuregruppe in Form eines Sulfophthalsäurederivats in das Polyesterpolyol eingebunden ist. Problematisch wirkt sich bei solchen Polyurethanen aus, daß die Sulfonatgruppe aufgrund des starren Phthalsäurekörpers, an den sie gebunden ist, nur über eine eingeschränkte Beweglichkeit verfügt, was sich häufig negativ auf die Dispersionseigenschaften des entsprechenden Polyurethans auswirkt. Darüber hinaus befinden sich solche Sulfonatgruppen nach dem Einbau in das Polyurethan direkt in der Hauptkette, wodurch gegebenenfalls Flexibilität und Beweglichkeit der Hauptkette eingeschränkt werden.

Die DE-C 34 0 7 563 beschreibt einen alternativen Weg zur Einführung von Sulfonsäuregruppen in Polyadditions- bzw. Polykondensationsprodukte. Hierbei wird ein zwei endständige OH-Gruppen tragendes, endständig ungesättigtes Diol durch die Bisulfit-Additionsreaktion in ein endständiges Sulfonat überführt. Das Sulfonat wird anschließend über die beiden OH-Gruppen beispielsweise in ein Polyurethan eingebunden. Auf diese Weise läßt sich zwar der Nachteil vermeiden, daß die Sulfonatgruppe an einem starren Gerüst direkt an der Hauptkette befestigt ist, die beschriebene Methode und die danach erhältlichen Verbindungen weisen jedoch ebenfalls eine Reihe von Nachteilen auf. So wirkt sich beispielsweise nachteilig aus, daß die Bisulfit-Additionsreaktion üblicherweise in wäßriger Umgebung stattfinden muß. Darüber hinaus stellt die Bisulfit-Additionsreaktion in der Regel die letzte Bearbeitungsstufe vor einer Einbindung in ein Polymeres dar, wodurch gegebenenfalls eine ausreichende Entwässerung erschwert wird.

Wird in dieser Umgebung ein relativ hydrophobes Diol für die Bisulfit-Additionsreaktion eingesetzt, so gestaltet sich die Isolierung des Reaktionsprodukts i. d. R. schwierig. Daher werden bei solchen Reaktionen üblicherweise hydrophile Verbindungen eingesetzt, beispielsweise die in der genannten Druckschrift beschriebenen Polyether. Solche sulfonierten Polyether lassen sich zwar anschließend in polymere Verbindungen einbauen, tragen jedoch einerseits nichts zur Flexibilisierung der Hauptkette bei, andererseits läßt sich aufgrund der Reaktionsbedingungen bei der Umsetzung die Hydrophilie der die Sulfonatgruppe tragenden Seitenkette nur in engen Grenzen variieren.

Es bestand daher ein Bedürfnis nach Sulfonsäuregruppen tragenden Verbindungen, die sich sowohl über Polyadditions- als auch über Polykondensationsreaktionen in Polymere einbauen lassen, wobei die Flexibilisierung der Hauptkette sowie die Flexibilität der die Sulfonatgruppe tragenden Seitenkette in weiten Grenzen variiert werden können.

Die DE-B 19 54 090 beschreibt ein Verfahren zur Herstellung von 2-(β-Aminopropionamido)-alkansulfonsäuresalzen und ihre Verwendung als anionische Aufbaukomponente bei der Herstellung von Polyurethandispersionen. Nachteilig wirkt sich bei den dort beschriebenen Substanzen aus, daß eine Einbindung in ein Polyurethan nur über eine Aminogruppe möglich ist. Die dabei entstehenden Polyharnstoffe weisen jedoch eine Reihe von Eigenschaften auf, die sich bei deren Anwendungen als polymere Tenside oder zur Dispersion von Feststoffen in einer Kunststoffmatrix nachteilig auswirken. Darüber hinaus sind die beschriebenen Verbindungen nur in wäßriger Phase verarbeitbar, wodurch der Fachmann in seiner Formulierungsfreiheit eingeschränkt wird. Eine Verarbeitung der Polyharnstoffe in organischen Lösemitteln mit geringerer Polarität ist in der Regel nicht möglich.

Die WO 91/06597 betrifft härtbare Aminoplastverbindungen und Katalysatoren zu deren Härtung. Beschrieben werden verschiedenste Umsetzungsprodukte, wie sie aus der Umsetzung von primären oder sekundären Aminen und einer Vinyl- oder Allylverbindung, die eine Sulfonatgruppe trägt, erhältlich sind. Beispielhaft wird die Umsetzung mit 2-Acrylamido-2-methylpropansulfonsäure (AMPS) mit verschiedensten Aminen aufgeführt. Die Druckschrift erwähnt jedoch keine Verbindungen, die sich in Polyurethane einbauen lassen und dabei sowohl zur Steuerung der Hydrophilie als auch zur Flexibilisierung der Hauptkette beitragen können.

Die DE-A 26 56 687 betrifft Aminodi- und Aminopolyalkylamidoalkansulfonsäuren, Verfahren zu deren Herstellung und deren Verwendung. Die beschriebenen Verbindungen sind jedoch nicht zum Einbau in Polymere geeignet.

Die US-A 4,985,591 beschreibt die Herstellung halbkristalliner Katalysatoren für die Härtung von Beschichtungen, wobei ein Isocyanat-Sulfonat durch Michael- Addition und anschließende Kettenverlängerung mit einem Isocyanat hergestellt wird. Die Verwendung solcher Verbindungen als Tenside oder deren Einbindung in Polymere wird jedoch dort nicht beschrieben.

Der vorliegenden Erfindung lag demnach die Aufgabe zugrunde, sulfonsäuregruppenhaltige Verbindungen zur Verfügung zu stellen, die bevorzugt selbst ausgezeichnete Dispergatoren darstellen, sich jedoch beispielsweise auch zum Einbringen von Sulfonsäuregruppen in Polymere eignen, wobei die Verbindungen auf einfache Weise derart abgeändert werden können, daß sich beispielsweise die Flexibilität der Hauptkette, die Flexibilität der die Sulfonsäuregruppe tragenden Seitenkette und der Grad der Hydrophilie der Verbindung variieren läßt. Weiterhin sollen solche Verbindungen, gute Dispergiereigenschaften aufweisen und, sofern sie zum Einbringen anionischer Gruppen in Polymere eingesetzt werden, dem daraus resultierenden Polymeren solche Eigenschaften verleihen. Darüber hinaus sollen die entsprechenden sulfonsäuregruppenhaltigen Verbindungen große Variabilität bezüglich der Einstellbarkeit der Löslichkeitsparameter aufweisen.

Gelöst wird die erfindungsgemäße Aufgabe durch Sulfonsäureverbindungen der nachstehend beschriebenen Art.

Gegenstand der vorliegenden Erfindung sind daher Sulfonsäureverbindungen der allgemeinen Formel I 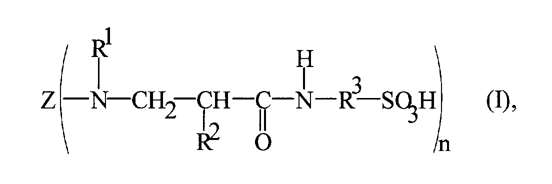 worin n für eine Zahl von größer als 1 bis 2, mindestens einer der Reste R¹ für R⁴-QH, R⁴-Q-(X-O-)mX-QH oder R⁴-O-Y-QH steht, wobei Q für O, NH, NR² oder S, R⁴ für einen linearen oder verzweigten, gesättigten oder ungesättigten Alkylrest mit 2 bis 44 C-Atomen, X für einen gegebenenfalls aromatisch substituierten Alkylrest mit 2 bis 14 C-Atomen, insbesondere mit 2 bis 10 C-Atomen, Y für einen Polyester, ein Polyamid, ein Polycarbonat, ein Polyurethan oder ein Polylacton mit einem Molekulargewicht M_{w} von 150 bis 5000 und m für einen Wert von 1 bis 300 steht, die Reste R² unabhängig voneinander jeweils für einen linearen oder verzweigten, gesättigten oder ungesättigten aliphatischen Kohlenwasserstoffrest mit 1 bis 20 C-Atomen oder einen gesättigten oder ungesättigten, gegebenenfalls substituierten cycloaliphatischen Kohlenwasserstoffrest mit 4 bis 20 C-Atomen, einen gegebenenfalls substituierten aliphatischen Kohlenwasserstoff mit 6 bis 20 C-Atomen oder einen gegebenenfalls substituierten aromatischen Kohlenwasserstoffrest mit 6 bis 18 bevorzugt 6 bis 10 C-Atomen, die Reste R³ für einen linearen oder verzweigten, gesättigten oder ungesättigten Alkylrest mit 2 bis 44 C-Atomen oder einen gesättigten oder ungesättigten Cycloalkylrest mit 6 bis 44 C-Atomen stehen, Z für einen linearen oder verzweigten, gesättigten oder ungesättigten gegebenenfalls substituierten Alkylrest mit 8 bis 44 C-Atomen, einen gegebenenfalls substituierten Cycloalkylrest mit 4 bis 44 C-Atomen, einen gegebenenfalls substituierten araliphatischen Kohlenwasserstoffrest mit 6 bis 40 C-Atomen oder einen Polyether, einen Polyester, ein Polyamid, ein Polycarbonat, ein Polyurethan oder ein Polylacton mit einem Molekulargewicht M_{w} von 150 bis 10000, wobei Z über geeignete funktionelle Gruppen mit dem Gesamtmolekül verbunden ist, oder ein Teil- oder Vollsalz davon.

Ein weiterer Gegenstand der vorliegenden Erfindung sind daher Sulfonsäureverbindungen der allgemeinen Formel I 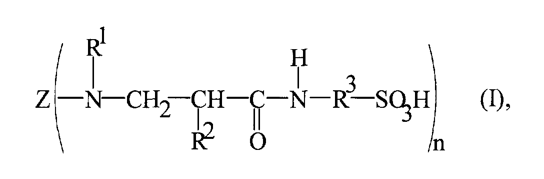 worin n für eine Zahl von mehr als 2 bis 100000, die Reste R¹ jeweils unabhängig voneinander für H, CH₃, einen linearen oder verzweigten, gesättigten oder ungesättigten Alkylrest mit 2 bis 44 C-Atomen oder einen Cykloalkylrest mit 4 bis 44 C-Atomen oder einen aromatischen Kohlenwasserstoffrest mit 6 bis 10 C-Atomen, R⁴-QH, R⁴-Q-(X-O-)ₘX-QH oder R⁴-O-Y-QH stehen, wobei Q für O, NH, NR² oder S, R⁴ für einen linearen oder verzweigten, gesättigten oder ungesättigten Alkylrest mit 1 bis 44 C-Atomen, und X, Y, m, R², R³ und Z die in Anspruch 1 genannte Bedeutung aufweisen.

Ebenfalls Gegenstand der vorliegenden Erfindung ist daher eine Sulfonsäureverbindung der allgemeinen Formel I 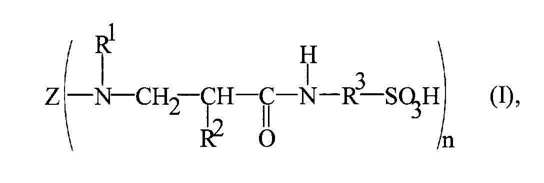 worin n gleich 1 ist, R² für H oder einen linearen oder verzweigten, gesättigten oder ungesättigten aliphatischen Kohlenwasserstoffrest mit 1 bis 20 C-Atomen, einen gesättigten oder ungesättigten, gegebenenfalls substituierten cycloaliphatischen Kohlenwasserstoffrest mit 4 bis 20 C-Atomen oder einen gegebenenfalls substituierten araliphatischen oder aromatischen Kohlenwasserstoffrest mit 6 bis 40 C-Atomen steht, R³ für einen linearen oder verzweigten, gesättigten oder ungesättigten aliphatischen Kohlenwasserstoffrest mit 1 bis 20 C-Atomen oder einen cycloaliphatischen Kohlenwasserstoffrest mit 4 bis 20 C-Atomen oder einen gegebenenfalls substituierten aromatischen Kohlenwasserstoff mit 6 bis 18 C-Atomen steht, R¹ und Z jeweils unabhängig voneinander für R⁴-QH, R⁴-Q-(X-O-)ₘX-QH oder R⁴-O-Y-QH stehen, wobei Q für O (Sauerstoff), NH, NR⁴ oder S, R⁴ für einen linearen oder verzweigten, gesättigten oder ungesättigten, gegebenenfalls aromatisch substituierten Alkylrest mit 2 bis 44 C-Atomen, X für einen gegebenenfalls aromatisch substituierten Alkylrest mit 2 bis 14 C-Atomen, Y für ein durch Polymerisation, Polyaddition oder Polykondensation erhältliches Polymeres mit einem Molekulargewicht M_{w} von 150 bis 5000 und m für einen Wert von 1 bis 300 steht und wobei nicht beide Reste R¹ und Z gleichzeitig für CH₂-CH₂-OH stehen, oder ein Salz davon.

Unter einer "Sulfonsäureverbindung" wird im Rahmen des vorliegenden Textes eine Verbindung gemäß der allgemeinen Formel I verstanden, die mindestens eine Sulfonsäuregruppen trägt, wobei der Begriff "Sulfonsäureverbindung" jedoch auch die Teil- und Vollsalze solcher Sulfonsäuren mit umfaßt. Unter Salzen werden beispielsweise die Umsetzungsprodukte der beanspruchten Sulfonsäuren mit Basen verstanden, wobei die Basen sowohl anorganischer als auch organischer Natur sein können. Beispiele für entsprechende Salze sind die Salze der Alkalimetalle wie Lithium, Natrium, Kalium, Rubidium oder Cäsium oder die Salze der Erdalkalimetalle wie Magnesium, Calcium oder Strontium. Neben den genannten Salzen mit anorganischen Verbindungen eignen sich jedoch im Rahmen der vorliegenden Erfindung auch Salze der oben genannten Sulfonsäuren mit organischen Basen. Im Rahmen einer bevorzugten Ausführungsform der vorliegenden Erfindung werden unter Salzen der oben genannten Sulfonsäuren Salze mit Aminoverbindungen verstanden. Besonders geeignete Aminoverbindungen sind aliphatische oder aromatische Aminoverbindungen, wie beispielsweise Pyridine, Alkanolamine oder Trialkylamine, wobei die entsprechenden Alkylreste unabhängig voneinander 1 bis etwa 22 C-Atome aufweisen. In einer weiteren bevorzugten Ausführungsform betrifft die Erfindung Salze der oben genannten Sulfonsäuren mit Pyridinen, Alkanolaminen oder Trialkylaminen, deren Alkylreste unabhängig voneinander 1 bis etwa 5 C-Atome aufweisen. Unter einem "Teilsalz" wird im Rahmen der vorliegenden Erfindung ein Salz einer Verbindung der allgemeinen Formel I verstanden, bei dem nicht alle Sulfonsäuregruppen in der Salzform vorliegen. Bei einem Vollsalz liegen alle Sulfonsäuregruppen in der Salzform vor.

Die in diesem Text angegebenen Molekulargewichte tragen die Einheit g/mol, sofern nichts anderes angegeben ist. Molekulargewichte von Verbindungen die eine statistische Molekulargewichtsverteilung aufweisen, wurden durch GPC bestimmt. Hierbei kamen folgende Materialien zum Einsatz:
- Säulenmaterial: PL-Gel 5 micrometer 2x 500 Angstr. 1X 1000 1 x 10.000
- Elutionsmittel: THF 1 ml/min
- Pumpe : Waters Typ 510
- Autosampler : Waters Typ 717
- UV Detektor: Waters Lambda - Max 481
- RI - Detektor: Waters Typ 410

Die Reste R¹, oder für den Fall n=1 auch der Rest Z, weisen im Rahmen einer bevorzugten Ausführungsform der vorliegenden Erfindung jeweils mindestens zwei C-Atome auf. Die Zahl der C-Atome bezieht sich dabei nicht notwendigerweise auf in einer Kette kovalent miteinander verbundene C-Atome, sondern die vorliegende Erfindung umfaßt auch solche Sulfonsäureverbindungen, deren Reste R¹, oder für den Fall n=1 auch der Rest Z, jeweils mindestens zwei C-Atome umfassen, die nicht direkt kovalent sondern beispielsweise über ein weiteres Atom wie O oder N miteinander verbunden sind.

Die Reste R¹, oder für den Fall n=1 auch der Rest Z, weisen im Rahmen der vorliegenden Erfindung insgesamt mindestens eine QH-Gruppe auf, worin Q die oben genannte Bedeutung aufweist. In einer bevorzugten Ausführungsform der vorliegenden Erfindungen kann die Zahl der QH-Gruppen in den Resten R¹, oder für den Fall n=1 auch der Rest Z, unabhängig voneinander beispielsweise 1 bis etwa 8, insbesondere 1 bis etwa 4 betragen. In einer weiteren bevorzugten Ausführungsform der Erfindung beträgt die Zahl der QH-Gruppen in den Resten R¹, oder für den Fall n=1 auch der Rest Z, 1, 2 oder 3. Die QH-Gruppen können dabei entweder nur an einem der Reste R¹, oder für den Fall n=1 auch am Rest Z, lokalisiert sein, es ist jedoch ebensogut möglich, daß die QH-Gruppen an zwei oder mehr Resten R¹, oder für den Fall n=1 auch am Rest Z, oder an beiden lokalisiert sind, sofern die Verbindung gemäß der allgemeinen Formel I mehr als einen Rest R¹ oder Z aufweist. Im Rahmen einer bevorzugten Ausführungsform der Erfindung weist jeder der Reste R¹, oder für den Fall n=1 auch der Rest Z, jeweils mindestens eine QH-Gruppe auf.

Im Rahmen einer weiteren bevorzugten Ausführungsform der Erfindung steht Q für O.

In einer bevorzugten Ausführungsform der Erfindung stehen die Reste R¹, oder falls n=1 auch Z, unabhängig voneinander für R⁴-QH, R⁴-Q-(X-O-)ₘX-QH oder R⁴-O-Y-QH stehen, wobei Q für O (Sauerstoff), NH, NR⁴ oder S steht, insbesondere für R⁴-OH, R⁴-O-(X-O-)ₘ-H oder R⁴-O-Y-OH, worin R⁴ für einen linearen oder verzweigten, gesättigten oder ungesättigten, gegebenenfalls aromatisch substituierten Alkylrest mit 2 bis etwa 44 C-Atomen oder einen substituierten oder unsubstituierten aromatischen Kohlenwasserstoffrest mit 6 bis etwa 10 C-Atomen, X für einen Alkylrest mit oder ohne aromatischen Substituenten mit 2 bis 14, insbesondere 2 bis 10 C-Atomen, Y für ein durch durch Polymerisation, Polyaddition oder Polykondensation erhältliches Polymeres, insbesondere einen Polyester, ein Polyamid, ein Polycarbonat, ein Polyurethan oder ein Polylacton mit einem Molekulargewicht M_{w} von 150 bis 5000, beispielsweise etwa 200 bis etwa 4.000 oder etwa 500 bis etwa 3000 oder etwa 800 bis etwa 2000 oder etwa 1000 bis etwa 1600, und m für einen Wert von 1 bis etwa 300, beispielsweise für einen Wert von 3 bis 150 oder von 10 bis 70, steht, wobei für den Fall, daß n=1 ist, nicht beide Reste R¹ und Z gleichzeitig für CH₂-CH₂-OH stehen.

In einer weiteren bevorzugten Ausführungsform der Erfindung steht R⁴ für einen linearen oder verzweigten, gesättigten, gegebenenfalls aromatisch substituierten Alkylrest mit 2 bis etwa 10, insbesondere 3 bis etwa 8 C-Atomen.

Wenn R¹, oder falls n=1 auch Z, für R⁴-Q-(X-O)ₘX-QH, insbesondere für R⁴-O-(X-O)ₘ-H steht, dann steht X in einer bevorzugten Ausführungsform der Erfindung für einen gesättigten, linearen oder verzweigten Alkylrest mit 2 bis 4, insbesondere 2 oder 3 C-Atomen oder einen aromatischen, substituierten, linearen oder verzweigten Alkylrest mit insgesamt 8 bis etwa 18 C-Atomen. R¹, oder falls n=1 auch Z, steht dann für eine Polyetherkette, deren Molekulargewicht M_{w} zum einen von X, hauptsächlich jedoch vom Wert für m abhängt. In einer bevorzugten Ausführungsform der Erfindung steht m für einen Wert von 1 bis etwa 200, insbesondere von etwa 3 bis etwa 150, beispielsweise etwa 5 bis etwa 50. Wenn der Wert für m größer als 1 ist, so kann X für verschiedene Alkylreste stehen, deren Zahl an C-Atomen im bereits oben genannten Bereich liegt. Bei größeren Werten für m, beispielsweise in einem Bereich von etwa 5 bis etwa 100, können die verschiedenen Alkylreste X in statistische Abfolge oder beliebig blockweise hintereinander angeordnet sein. Der Wert m muß nicht notwendigerweise ein ganzzahliger Wert sein, m kann ebensogut beliebige Werte annehmen, die zwischen zwei ganzen Zahlen im oben genannten Bereich liegen. Wenn m einen nicht ganzzahligen Wert annimmt, so stellt m einen Durchschnittswert dar, wie er im Rahmen üblicher Polyethersynthesen aufgrund der statistischen Verteilung von Molekulargewichten bei der Polyaddition auftritt. In einer weiteren bevorzugten Ausführungsform der Erfindung steht X für CH₂-CH₂ oder CH(CH₃)-CH₂ oder CH₂-CH(CH₃) oder eine statistische oder blockweise Abfolge dieser Reste.

Polyether der oben genannten Art können beispielsweise durch Polymerisation von Ethylenoxid, Propylenoxid, Butylenoxid, Tetrahydrofuran, Styroloxid oder Epichlorhydrin mit sich selbst, z. B. in Gegenwart von basischen Katalysatoren wie Natriummethylat, Kaliummethylat, Natriumethylat, Kaliumethylat, Natriumhydroxid, Kaliumhydroxid oder BF₃, oder durch Anlagerung der genannten Verbindungen, gegebenenfalls im Gemisch oder nacheinander, an Startkomponenten mit reaktionsfähigen Wasserstoffatomen wie Alkohole oder Amine, z. B. Wasser, Diethylenglykol, Propandiol-1,2, Propandiol-1,3, 1,2-Bis(4-hydroxydiphenyl)propan oder Anilin erhalten werden.

In einer weiteren bevorzugten Ausführungsform der vorliegenden Erfindung steht der Rest R¹, oder wenn n=1 R¹ oder Z, oder beide, für R⁴-Q-Y-QH, insbesondere für R⁴-O-Y-OH. Y steht darin für einen Polyester, ein Polyamid, ein Polycarbonat oder ein Polylacton mit einem Molekulargewicht M_{w} von etwa 200 bis etwa 4000, beispielsweise etwa 300 bis etwa 3000 oder etwa 500 bis etwa 2000 oder etwa 800 bis etwa 1500. In einer weiteren bevorzugten Ausführungsform der Erfindung handelte es sich bei den genannten Polymeren um lineare Polymere.

Geeignete Polyester lassen sich beispielsweise durch Polykondensation von linearen oder verzweigten, aliphatischen oder cycloaliphatischen, gesättigten oder ungesättigten Diolen mit linearen oder verzweigten, gesättigten oder ungesättigten, aliphatischen oder cycloaliphatischen Dicarbonsäuren oder mit aromatischen Dicarbonsäuren erhalten. Geeignete Diole sind beispielsweise Ethylenglykol, Propandiol-1,2, Propandiol-1,3, Butandiol-1,3, Butandiol-1,4, Butendiol-1,4, Butindiol-1,4, Pentandiol-1,5, Neopentylglykol, Bis-(hydroxymethyl)cyclohexane wie 1,4-Bis(hydroxymethyl)cyclohexan, 2-Methylpropan- 1,3 -diol, Methylpentandiole, Diethylenglykol, Triethylenglykol, Tetraethylenglykol, Dipropylenglykol, Dibutylenglykol sowie weitere höhere Oligomere der genannten Glykole, wobei auch gemischte Oligomere geeignet sind. Im Rahmen der vorliegenden Erfindungen sind Polyester bevorzugt, deren Herstellung unter Verwendung von Alkoholen der allgemeinen Formel HO-(CH₂)ₓ-OH, worin x für eine Zahl von 2 bis etwa 44, beispielsweise für eine gerade Zahl von etwa 2 bis etwa 20, steht, durchgeführt wurde. Beispiele für solche Alkohole sind Ethandiol, Propandiol-1,3, Butandiol-1,4, Pentandiol-1,5, Hexandiol-1,6, Heptandiol-1,7, Octandiol-1,8, Nonandiol-1,9, Decandiol-1,10, Undecandiol-1,11, oder Dodecandiol-1,12, oder Gemische aus zwei oder mehr davon.

Als Dicarbonsäuren eignen sich beispielsweise Dicarbonsäuren der allgemeinen Formel HOOC-(CH₂)_{y}-COOH, wobei y für eine Zahl von 1 bis etwa 20, beispielsweise für eine gerade Zahl von 2 bis etwa 20 steht. Beispiele für derartige Dicarbonsäuren sind Bernsteinsäure, Adipinsäure, Dodecandicarbonsäure und Sebacinsäure. Ebenfalls als Säuren zum Aufbau der obengenannten Polyester geeignet sind Korksäure, Azelainsäure, Phthalsäure, Isophthalsäure, Phthalsäureanhydrid, Tetrahydrophthalsäureanhydrid, Hexahydrophthalsäureanhydrid, Tetrachlorophthalsäureanhydrid, Endomethylentetrahydrophthalsäureanhydrid, Glutarsäureanhydrid, Maleinsäure, Maleinsäureanhydrid, Fumarsäure oder Dimerfettsäuren, oder Gemische aus zwei oder mehr davon.

In einer bevorzugten Ausführungsform der vorliegenden Erfindung weisen die eingesetzten Polyester ein Molekulargewicht von etwa 150 bis etwa 1500 auf, insbesondere etwa 150 bis etwa 300.

Im Rahmen der vorliegenden Erfindung als Rest Y geeignete Polyamide lassen sich beispielsweise durch Umsetzung der oben genannten Dicarbonsäuren mit entsprechenden Diaminen herstellen. Geeignete Diamine sind beispielsweise solche, die ein Molekulargewicht von etwa 32 bis etwa 200 g/mol aufweisen und mindestens zwei primäre, 2 sekundäre oder eine primäre und eine sekundäre Aminogruppen aufweisen. Beispiele hierfür sind Diaminoethan, Diaminopropane, Diaminobutane, Diaminohexane, Piperazin, 2,5-Dimethylpiperazin, Amino-3-aminomethyl-3,5,5-trimethylcyclohexan (Isophorondiamin, IPDA), 4,4'-Diaminodicyclohexylmethan, 1,4-Diaminocyclohexan, Aminoethylethanolamin, Hydrazin, Hydrazinhydrat oder, gegebenenfalls in geringen Mengen, Diamine wie die Diethylentriamin oder 1,8-Diamino-4-aminomethyloctan. Im Rahmen der vorliegenden Erfindung einsetzbare Polyamide weisen in einer bevorzugten Ausführungsform ein Molekulargewicht von etwa 100 bis etwa 1500 auf.

Weiterhin als Diole zum Aufbau entsprechender Polyester geeignet sind Polycarbonatdiole wie sie zum Beispiel durch Umsetzung von Phosgen mit einem Überschuß der oben genannten Diole erhältlich sind.

Die im Rahmen der vorliegenden Erfindung als Rest Y geeigneten Polycarbonate entsprechen den bereits oben genannten Polycarbonaten, wie sie zum Beispiel durch Umsetzung von Phosgen mit einem oder einem Gemische aus zwei oder mehr der oben genannten Diole erhältlich sind. In einer bevorzugten Ausführungsform der Erfindung weisen die Polycarbonate ein Molekulargewicht von etwa 100 bis etwa 10000, beispielsweise etwa 100 bis etwa 5000, bevorzugt etwa 200 bis etwa 1500 und insbesondere etwa 200 bis etwa 800 auf.

Im Rahmen der vorliegenden Erfindung als Rest Y geeignete Polyurethane lassen sich beispielsweise durch übliche und dem Fachmann bekannte Umsetzungen von Polyisocyanaten mit Polyolen oder dergleichen gegenüber Polyisocyanaten unter Polykondensation reaktionsfähigen Verbindungen erhalten. Zur Herstellung solcher Polyurethane geeignete Verbindungen werden beispielsweise im nachfolgenden Text beschrieben. Im Rahmen der vorliegenden Erfindung als Rest Y geeignete Polyurethan weisen beispielsweise ein Molekulargewicht von mindestens etwa 100 bis etwa 4000, beispielsweise etwa 200 bis etwa 3000, insbesondere von etwa 300 bis etwa 2000 oder etwa 500 bis etwa 1500 auf. Im Rahmen des vorliegenden Textes wird unter einem Polyurethan eine Verbindung verstanden, die mindestens zwei Urethangruppen pro Molekül aufweist. Es eignen sich als Polyurethane beispielsweise auch solche Polyurethane, wie sie im Rahmen der vorliegenden Erfindung dargestellt werden.

Erfindungsgemäß zum Einsatz als Rest Y sind weiterhin Polylactone geeignet wie sie durch Homo- oder Mischpolymerisation von Lactonen, gegebenenfalls in Gegenwart eines geeigneten, difunktionellen Startermoleküls, erhältlich sind. Als Lactone kommen bevorzugt solche in Betracht, die sich von Verbindungen der allgemeinen Formel HO-(CH₂)_{z}-COOH ableiten, wobei z für eine Zahl von 1 bis etwa 20 steht. Beispiele sind E-Caprolacton, β-Propiolacton, γ-Butyrolacton oder Methyl-ε-caprolacton oder Gemische aus zwei oder mehr davon. Im Rahmen der vorliegenden Erfindung bevorzugt eingesetzte Polylactone weisen ein Molekulargewicht von etwa 100 bis etwa 1500, insbesondere etwa 200 bis etwa 800 auf.

Es ist im Rahmen der vorliegenden Erfindung nicht erforderlich, daß die Reste R¹ in den Verbindungen der allgemeinen Formel identisch sind. Jeder der Reste R¹ kann unabhängig von gegebenenfalls im Molekül befindlichen weiteren Resten R¹ für einen Rest stehen, wie er oben definiert wurde. Ebenso ist es für den Fall, daß n=1 ist, im Rahmen der vorliegenden Erfindung nicht nötig, daß R¹ und Z identisch sind.

Der Rest R² steht im Rahmen der vorliegenden Erfindung für H oder einen linearen oder verzweigten, gesättigten oder ungesättigten aliphatischen Kohlenwasserstoffrest mit 1 bis etwa 30 C-Atomen, bevorzugt mit 1 bis etwa 20 C-Atomen, einen gesättigten oder ungesättigten, gegebenenfalls substituierten cycloaliphatischen Kohlenwasserstoffrest mit 4 bis etwa 30 C-Atomen, bevorzugt mit 1 bis etwa 20 C-Atomen, einen gegebenenfalls substituierten araliphatischen oder aliphatischen Kohlenwasserstoffrest mit 6 bis etwa 40 C-Atomen, bevorzugt mit 6 bis etwa 20 C-Atomen, oder einen gegebenenfalls substituierten aromatischen Kohlenwasserstoffrest mit 6 bis 40 C-Atomen, insbesondere mit 6 bis etwa 18 C-Atomen. Im Rahmen der angegebenen Bereiche kann der Rest R² so gewählt werden, daß die beanspruchte Sulfonsäureverbindung zum Beispiel ein bestimmtes Löslichkeitsprofil, beispielsweise im Zusammenhang mit ihrer Herstellung oder ihrer späteren Verwendung, erfüllt oder im Hinblick auf eine andere, vom Vorhandensein bestimmter Alkylketten im Molekül abhängige Eigenschaft auf eine entsprechende Anwendung hin, maßgeschneidert werden kann. Im Rahmen einer bevorzugten Ausführungsform der vorliegenden Erfindung steht der Rest R² für Wasserstoff oder einen linearen oder verzweigten, gesättigten Kohlenwasserstoffrest mit 1 bis etwa 16, insbesondere 1 bis 6 C-Atomen. Im Rahmen einer weiteren bevorzugten Ausführungsform der Erfindung steht der Rest R² für Wasserstoff oder CH₃ oder Phenyl.

Der Rest R³ steht im Rahmen der vorliegenden Erfindung für einen linearen oder verzweigten, gesättigten oder ungesättigten aliphatischen Kohlenwasserstoffrest mit 1 bis etwa 30 C-Atomen oder einen cycloaliphatischen Kohlenwasserstoffrest mit 4 bis etwa 30 C-Atomen. Neben der bereits im Rahmen der Ausführungen zum Rest R² beschriebenen Beeinflussung der Löslichkeitsparameter, kann eine Veränderung des Rests R³ im Rahmen der vorliegenden Erfindung auch dazu benutzt werden, die Flexibilität und den Abstand der Sulfonsäuregruppe vom Rest des Moleküls, insbesondere beim Einbau der erfindungsgemäßen Sulfonsäureverbindungen in ein Polymeres, zu variieren. Im Rahmen einer bevorzugten Ausführungsform der Erfindung steht der Rest R³ für einen linearen oder verzweigten aliphatischen Kohlenwasserstoffrest mit 3 bis 8 C-Atomen.

Der Rest Z steht im Rahmen der vorliegenden Ausführungsform für einen linearen oder verzweigten, gesättigten oder ungesättigten gegebenenfalls substituierten Alkylrest mit 8 bis 44 C-Atomen, einen gegebenenfalls substituierten Cycloalkylrest mit 4 bis 44 C-Atomen, einen gegebenenfalls substituierten araliphatischen Kohlenwasserstoffrest mit 6 bis 40 C-Atomen oder einen Polyether, einen Polyester, ein Polyamid, ein Polycarbonat, ein Polyurethan oder ein Polylacton mit einem Molekulargewicht M_{w} von 150 bis 1500, wobei Z über geeignete funktionelle Gruppen mit dem Gesamtmolekül verbunden ist. Zur Anbindung an das Gesamtmolekül geeignete funktionelle Gruppen sind grundsätzlich solche funktionellen Gruppen, die unter Ausbildung einer kovalenten Bindung mit dem entsprechenden Stickstoffatom in der allgemeinen Formel I reagieren können. Beispiele für solche funktionellen Gruppen sind NCO-Gruppen, Epoxygruppen, Carbonsäuregruppen, Carbonsäureanhydride, Carbonsäurechloride und dergleichen. Der Rest Z steht dann beispielsweise für -(O)C-Z¹-C(O)-, -(O)C-HN-Z¹-HN-C(O)-, -H₂C-CH(OH)-Z¹-CH(OH)-CH₂- und dergleichen, wobei Z¹ für einen linearen oder verzweigten, gesättigten oder ungesättigten gegebenenfalls substituierten Alkylrest mit 8 bis 44 C-Atomen, einen gegebenenfalls substituierten Cycloalkylrest mit 4 bis 44 C-Atomen, einen gegebenenfalls substituierten araliphatischen Kohlenwasserstoffrest mit 6 bis 40 C-Atomen oder einen Polyether, einen Polyester, ein Polyamid, ein Polycarbonat, ein Polyurethan oder ein Polylacton mit einem Molekulargewicht M_{w} von 150 bis 5000 steht.

Als Polyester, Polyamid, Polycarbonat, Polyurethan oder Polylacton mit einem Molekulargewicht M_{w} von 150 bis 5000 eignen sich die bereits oben im Rahmen der Erläuterung des Restes R¹ genannten und erläuterten Verbindungen.

Da mit den erfindungsgemäßen Verbindungen Sulfonsäureverbindungen zur Verfügung gestellt werden sollen, die auch in nicht-wäßriger Lösung, insbesondere in einem Lösemittel, das wenigstens weitgehend frei von protischen Bestandteilen ist, verarbeitbar sind, erfährt die oben genannte Definition eine wesentliche Einschränkung. Sofern nämlich für den Fall n=1einer der beiden Reste R¹ und Z 2 C-Atome und eine QH-Gruppe aufweist muß der verbleibende Rest mindestens 3 C-Atome aufweisen.

Der Parameter n steht im Rahmen einer ersten Ausführungsform der Erfindung für eine Zahl, die größer als 1 und kleiner als 2 ist oder 2 ist. Insbesondere steht n für eine Zahl von etwa 1,3 bis etwa 1,99, beispielsweise etwa 1,5 bis etwa 1,8, insbesondere etwa 1,8 bis 2.

In einer zweiten Ausführungsform steht n für 1.

Im Rahmen einer weiteren Ausführungsform der Erfindung steht n für eine Zahl von mehr als 2 bis zu etwa 1000000, insbesondere für eine Zahl von etwa 2,1 bis etwa 10000 oder etwa 2,5 bis etwa 100 oder etwa 2,8 bis etwa 20, insbesondere von 2 bis 6. Geeignete Verbindungen, in denen n für eine der oben genannten Zahlen steht, sind beispielsweise Polyethylenimine oder Polyvinylamine oder Aminogruppen tragende Polyacrylate oder - methacrylate.

Im Rahmen der vorliegenden Erfindung besonders geeignete Verbindungen weisen beispielsweise eine Struktur gemäß den nachfolgenden Formeln Ia oder Ib auf:

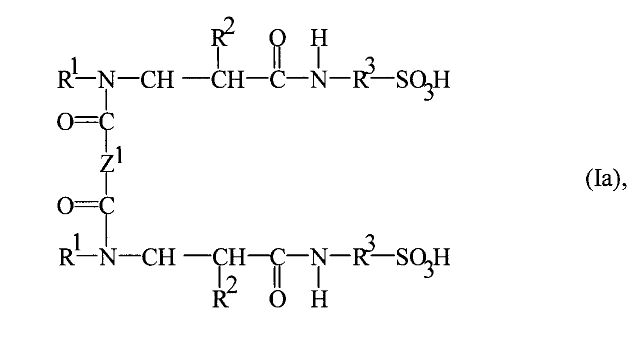

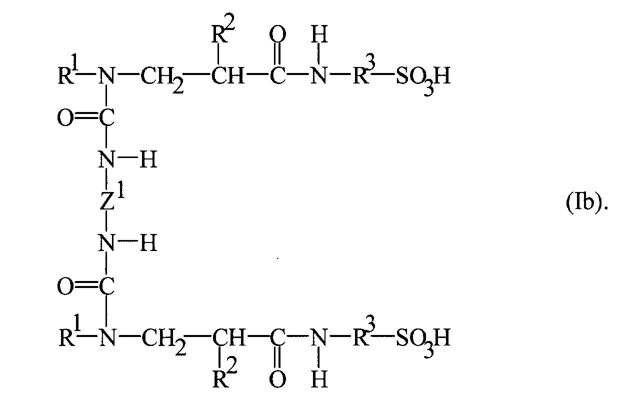

Die erfindungsgemäßen Sulfonsäureverbindungen lassen sich gemäß den Regeln der organischen Chemie auf verschiedene Weise herstellen.

Beispielsweise ist es möglich, die erfindungsgemäßen Verbindungen durch Umsetzung entsprechender Komponenten A und B im Sinne einer Michael-Addition herzustellen. Anschließend kann gemäß einer bevorzugten Ausführungsform eine weitere Reaktion mit einer mindestens difunktionellen Komponente C erfolgen.

Gegenstand der Erfindung ist daher auch ein Verfahren zur Herstellung einer Sulfonsäureverbindung gemäß der allgemeinen Formel I, bei dem eine Verbindung der allgemeinen Formel II

R¹-NHZ³ (II),

oder ein Gemisch aus zwei oder mehr solcher Verbindungen, worin R¹ wie oben definiert ist, und Z³ für H oder Z stehen kann, wobei Z wie für den Fall, daß n=1 ist, definiert ist, als Komponente A, mit einer Verbindung der allgemeinen Formel III 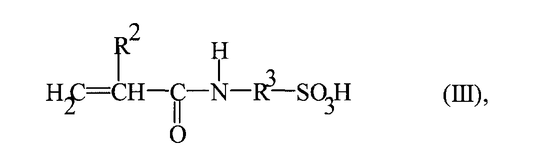 oder einem Gemisch aus zwei oder mehr solcher Verbindungen, worin R² und R3 wie oben definiert sind, als Komponente B, umgesetzt wird. In einer bevorzugten Ausführungsform
wird das Reaktionsprodukt mit einer Verbindung der allgemeinen Formel V

Z¹(-L)ₙ (V),

als Komponente C, worin Z¹ und n wie oben definiert sind und L für eine NCO-, Epoxy-, Carbonsäure-, Carbonsäurechlorid- oder Carbonsäureanhydridgruppe steht, unter Erhalt einer Verbindung der allgemeinen Formel I umgesetzt.

Wenn hierbei die Verbindung gemäß der allgemeinen Formel III (Komponente B) als Säure eingesetzt wird, so sollte Komponente A bevorzugt mindestens im molaren Überschuß eingesetzt werden.

Verbindungen der allgemeinen Formel II (Komponente A) lassen sich nach allgemein bekannten Grundsätzen der organischen Chemie herstellen. Ausgangspunkt zur Herstellung solcher Moleküle ist in der Regel die Verbindung NH(R³OH)₂, die beispielsweise zur Herstellung der oben genannten Polyether mit entsprechenden Alkylenoxiden, wie bereits oben beschrieben, umgesetzt wird. Analog läßt sich durch Kondensationsreaktion dieser Verbindung mit entsprechend funktionalisierten Polyestern, Polyamiden, Polycarbonaten oder Polylactonen ein Molekül der allgemeinen Formel II erhalten.

In einer ersten Ausführungsform des erfindungsgemäßen Herstellungsverfahrens wird daher ein Amin, insbesondere ein Monoamin, der allgemeinen Formel II mit einer ethylenisch ungesättigten Amidosulfonsäureverbindung, bevorzugt eine Amidosulfonsäureverbindung der allgemeinen Formel III, unter geeigneten Bedingungen umgesetzt.

Die Reaktion kann mit oder ohne Lösemittel ausgeführt werden. Geeignete Lösemittel sind beispielsweise Alkohole wie Methanol, Ethanol, Isopropylalkohol, Ether wie Ethylenglykol, Dimethylether oder Tetrahydrofuran, Ketone wie Aceton oder Methylethylketon (MEK), N-Methylpyrrolidon (NMP), N,N-Dimethylformamid (DMF), Acetonitril, Trichlormethan oder Toluol, oder Gemische aus zwei oder mehr davon. Gegebenenfalls kann zusätzlich zu den oben genannten Lösemitteln, insbesondere zusammen mit den oben genannten polaren Lösemitteln, Wasser im Lösemittelgemisch während der Reaktionen vorliegen. Wenn die erfindungsgemäßen Verbindungen zur Herstellung von im wesentlichen wasserfreien Polymeren eingesetzt werden sollen, dann ist es im Rahmen der vorliegenden Erfindung bevorzugt, die Reaktion in Abwesenheit von Wasser durchzuführen. In diesem Fall sind besonders bevorzugte Lösemittel Tetrahydrofuran, Aceton oder Methylethylketon oder ein Gemisch aus zwei oder mehr davon. Die Reaktionstemperatur liegt zwischen etwa 0 °C und etwa 200 °C. Gute Ergebnisse lassen sich beispielsweise in einem Temperaturbereich von etwa 20 °C bis etwa 90 °C erzielen. Die Umsetzung kann gegebenenfalls durch Zugabe eines basischen Katalysators beschleunigt werden. Geeignete basische Katalysatoren sind beispielsweise Triethylamin, Pyridin, Benzyltrimethylammoniumhydroxid, Natriumhydroxid oder Kaliumhydroxid.

Gegebenenfalls kann während der Reaktion noch ein Polymerisationsinhibitor im Reaktionsgemisch vorliegen. Geeignete Polymerisationsinhibitoren sind beispielsweise Hydrochinonmonomethylether, stabile Radikale wie 2,2,6,6-Tetramethyl-piperidin-1-oxylradikal (TEMPO) oder 2,2,6,6-Tetramethyl-4-hydroxypiperidin-1-oxylradikal (TEMPOL), Polymerisationsinhibitoren aus der Gruppe der sterisch gehinderten Amine (HALS) oder aus der Gruppe der Nitroxide.

Die erfindungsgemäßen Sulfonsäureverbindungen weisen gemäß der allgemeinen Formel I mindestens eine OH-, NH₂-, NHR²- oder SH-Gruppe in mindestens einem der Reste R¹, und, in Abhängigkeit vom Parameter n, mehr als eine Sulfonsäuregruppe oder ein Salz einer Sulfonsäuregruppe auf. Aufgrund der bereits oben genannten weitgehenden Variationsmöglichkeiten bezüglich der Hydrophilie der erfindungsgemäßen Sulfonsäureverbindungen und deren Flexibilität sowie dem Molekulargewicht, eignen sich die erfindungsgemäßen Sulfonsäureverbindungen zum Einbau in Polyadditions- bzw. Polykondensationsprodukte.

Gegenstand der vorliegenden Erfindung ist daher auch ein Polyadditions- oder Polykondensationsprodukt, das mindestens eine Struktureinheit gemäß der allgemeinen Formel IV 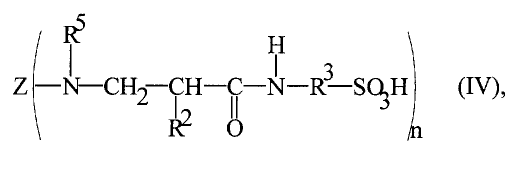 aufweist, worin die Reste R⁵ jeweils unabhängig voneinander für R⁴-Q-, R⁴-Q-(X-O-)mX-Q- oder R⁴-O-Y-Q stehen, wobei Q für O, NH, NR² oder S steht, und n für eine Zahl von größer als 1, insbesondere von 1 bis 1000000, steht, R⁴ für einen linearen oder verzweigten, gesättigten oder ungesättigten Alkylrest mit 2 bis 44 C-Atomen, X für einen Alkylrest mit 2 bis 10 C-Atomen, Y für einen Polyester, ein Polyamid, ein Polycarbonat, ein Polyurethan oder ein Polylacton mit einem Molekulargewicht M_{w} von 150 bis 5000 und m für einen Wert von 1 bis 300 steht, die Reste R² unabhängig voneinander jeweils für einen linearen oder verzweigten, gesättigten oder ungesättigten aliphatischen Kohlenwasserstoffrest mit 1 bis 20 C-Atomen oder einen cycloaliphatischen Kohlenwasserstoffrest mit 4 bis 20 C-Atomen oder einen gegebenenfalls substituierten aromatischen Kohlenwasserstoffrest mit 6 bis 10 C-Atomen, die Reste R³ für einen linearen oder verzweigten, gesättigten oder ungesättigten Alkylrest mit 2 bis 44 C-Atomen oder einen gesättigten oder ungesättigten Cycloalkylrest mit 6 bis 44 C-Atomen stehen, Z für einen linearen oder verzweigten, gesättigten oder ungesättigten gegebenenfalls substituierten Alkylrest mit 8 bis 44 C-Atomen, einen gegebenenfalls substituierten Cycloalkylrest mit 4 bis 44 C-Atomen, einen gegebenenfalls substituierten araliphatischen Kohlenwasserstoffrest mit 6 bis 40 C-Atomen oder einen Polyether, einen Polyester, ein Polyamid, ein Polycarbonat, ein Polyurethan oder ein Polylacton mit einem Molekulargewicht M_{w} von 150 bis 10000, wobei Z über geeignete funktionelle Gruppen mit dem Gesamtmolekül verbunden ist, oder ein Teil- oder Vollsalz davon.

Die Reste R⁵ entsprechen damit im wesentlichen der obigen Definition für R¹, wobei der Tatsache Rechnung getragen ist, daß eine Verknüpfung an eine Polymerkette unter Abspaltung eines H-Atoms stattgefunden hat.
Gegenstand der vorliegenden Erfindung ist daher ebenfalls ein Polyadditions- oder Polykondensationsprodukt, das mindestens eine Struktureinheit gemäß der allgemeinen Formel IVa 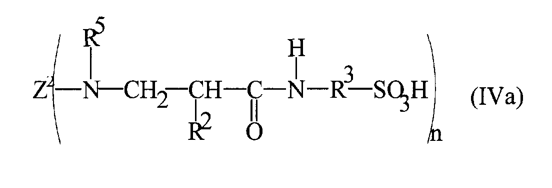 aufweist, worin n für 1 steht, und R² für H oder einen linearen oder verzweigten, gesättigten oder ungesättigten aliphatischen Kohlenwasserstoffrest mit 1 bis 20 C-Atomen, einen gesättigten oder ungesättigten, gegebenenfalls substituierten cycloaliphatischen Kohlenwasserstoffrest mit 4 bis 20 C-Atomen oder einen gegebenenfalls substituierten araliphatischen oder aromatischen Kohlenwasserstoffrest mit 6 bis 40 C-Atomen steht, R³ für einen linearen oder verzweigten, gesättigten oder ungesättigten aliphatischen Kohlenwasserstoffrest mit 1 bis 20 C-Atomen oder einen cycloaliphatischen Kohlenwasserstoffrest mit 4 bis 20 C-Atomen oder einen gegebenenfalls substituierten aromatischen Kohlenwasserstoff mit 6 bis 18 C-Atomen steht, Z² und R⁵ jeweils unabhängig voneinander für R⁴-Q-, R⁴-Q-(X-O-)ₘX-Q- oder R⁴-O-Y-Q- stehen, wobei Q für O (Sauerstoff), NH, NR⁴ oder S, R⁴ für einen linearen oder verzweigten, gesättigten oder ungesättigten, gegebenenfalls aromatisch substituierten Alkylrest mit 2 bis 44 C-Atomen, X für einen gegebenenfalls aromatisch substituierten Alkylrest mit 2 bis 14 C-Atomen, Y für ein durch Polymerisation, Polyaddition oder Polykondensation erhältliches Polymeres mit einem Molekulargewicht M_{w} von 150 bis 5000 und m für einen Wert von 1 bis 300 steht und wobei nicht beide Reste Z² und R⁵ gleichzeitig für CH₂-CH₂-OH stehen, oder ein Salz davon.

Die Reste Z² und R⁵ entsprechen damit im wesentlichen der obigen Definition für R¹ und Z, wobei der Tatsache Rechnung getragen ist, daß eine Verknüpfung an eine Polymerkette stattgefunden hat. Darüber hinaus umfaßt die Struktureinheit gemäß der allgemeinen Formel IVa auch solche Polyadditions- oder Polykondensationsprodukte, bei denen die Reste Z² und R⁵ jeweils nur 2 C-Atome aufweisen.

Unter einem "Polymeren" wird im Rahmen der vorliegenden Erfindung ein Polyadditions- oder Polykondensationsprodukt verstanden. Ein Polymeres im Sinne der vorliegenden Erfindung kann ein geringeres Molekulargewicht aufweisen als die Struktureinheit gemäß der allgemeinen Formel IV oder IVa. Es kann jedoch auch ein im wesentlichen identisches Molekulargewicht aufweisen oder ein Molekulargewicht, das oberhalb dessen der Struktureinheit gemäß der allgemeinen Formel IV oder IVa liegt . In einer bevorzugten Ausführungsform der vorliegenden Erfindung weist das Polymere ein oberhalb des Molekulargewichts der Struktureinheit gemäß der allgemeinen Formel IV oder IVa liegendes Molekulargewicht auf.

Zu den Polyadditionsprodukten zählen beispielsweise die Umsetzungsprodukte der erfindungsgemäßen Sulfonsäureverbindungen mit Verbindungen, die eine Polyadditionsreaktion mit einer OH-Gruppe eingehen können. Hierzu zählen beispielsweise die Epoxygruppe und die Isocyanatgruppe. Polykondensationsprodukte im erfindungsgemäßen Sinn sind Umsetzungsprodukte der erfindungsgemäßen Sulfonsäureverbindungen mit funktionellen Gruppen die mit OH-Gruppen eine Kondensationsreaktion eingehen können. Beispiele für solche funktionellen Gruppen sind Carbonsäuren oder Carbonsäurechloride.

Im Rahmen einer bevorzugten Ausführungsform der Erfindung handelt es sich bei den Polyadditions- und Polykondensationsprodukten um Polyurethane, Polyester, Polyether, Polycarbonate, Polyetherester, Polyamide, Polyesteramide, Polyetheramide, Polylactone oder Polylactame.

Demgemäß ist ein weiterer Gegenstand der Erfindung ein Verfahren zur Herstellung eines erfindungsgemäßen Polyadditions- oder Polykondensationsprodukts, bei dem eine Verbindung der allgemeinen Formel I, worin R¹, R², R³ und Z definiert sind, und eine Verbindung oder ein Gemisch aus zwei oder mehr Verbindungen, die zusammen mit der Verbindung der allgemeinen Formel I unter Erhalt eines Polyadditions- oder Polykondensationsprodukts reagieren können, unter geeigneten Reaktionsbedingungen umgesetzt werden.

Die Umsetzung der erfindungsgemäßen Sulfonsäureverbindungen mit den entsprechenden funktionellen Gruppen im Rahmen einer Polyaddition oder einer Polykondensation erfolgt nach den allgemeinen Regeln der organischen Chemie bzw. der Polymerchemie.

In einer besonders bevorzugten Ausführungsform der vorliegenden Erfindung ist das Polyadditionsprodukt ein Polyurethan. Polyurethane lassen sich durch Umsetzung der erfindungsgemäßen, OH-Gruppen tragenden Sulfonsäureverbindungen mit Polyisocyanaten, beispielsweise Diisocyanaten oder Triisocyanaten erhalten. Als Isocyanate eignen sich dabei sowohl monomere, niedermolekulare Polyisocyanaten als auch Isocyanatgruppen tragende Präpolymere.

Als monomere Polyisocyanate geeignet sind insbesondere die Diisocyanate der allgemeinen Formel X(NCO)₂, wobei X für einen aliphatischen Kohlenwasserstoffrest mit 4 bis etwa 12 C-Atomen, einen cycloaliphatischen oder aromatischen Kohlenwasserstoffrest mit 6 bis etwa 15 C-Atomen oder einen aliphatischen Kohlenwasserstoffrest mit 7 bis etwa 15 C-Atomen steht. Beispiele derartiger Diisocyanate sind Tetramethylendiisocyanat, Hexamethylendiisocyanat, Dodecamethylendiisocyanat, Diisocyanatocyclohexan-1,4, 1-Diisocyanato-3,5,5-trimethyl-5-isocyanatomethylcyclohexan (IPDI), 2,2-Bis-(4-isocyanatocyclohexyl)propan, Trimethylhexandiisocyanat, 1,4-Diisocyanatobenzol, 2,4-Diisocyanatotoluol, 2,6-Diisocyanatotoluol, 4,4'-Diisocyanatodiphenylmethan, 2,4'-Diisocyanatodiphenylmethan, p-Xylylendiisocyanat, Tetramethylxylylendiisocyanat (TMXDI), die Isomeren des Bis-(4-Isocyanatocyclohexyl)methan, oder Gemische aus zwei oder mehr der genannten Verbindungen.

Als Gemische dieser Isocyanate sind besonders die Gemische der jeweiligen Strukturisomeren von Diisocyanatotoluol und Diisocyanatodiphenylmethan von Bedeutung, insbesondere die Mischung aus 80 mol-% 2,4-Diisocyanatotoluol und 20 mol% 2,6-Diisocyanatotoluol geeignet. Weiterhin sind Gemische von aromatischen Polyisocyanaten wie 2,4-Diisocyanatotoluol und 2,6-Diisocyanatotoluol mit aliphatischen oder cycloaliphatischen Polyisocyanaten wie Hexamethylendiisocyanat oder IPDI besonders vorteilhaft, wobei das bevorzugte Mischungsverhältnis der aliphatischen zu aromatischen Polyisocyanaten 4 : 1 bis 1 : 4 beträgt.

In einer weiteren bevorzugten Ausführungsform erfolgt die Herstellung der Polyurethane, die mindestens ein Strukturelement gemäß der allgemeinen Formel I aufweisen, durch Umsetzung der erfindungsgemäßen Sulfonsäureverbindungen mit Isocyanatgruppen tragenden Polymeren.

Solche Isocyanatgruppen tragenden Polymere lassen sich beispielsweise durch Umsetzung von Diisocyanaten mit Diolen und gegebenenfalls weiteren Verbindungen, die gegenüber Polyisocyanaten reaktionsfähige Gruppen aufweisen, erhalten. Als Diole sind beispielsweise höhermolekulare Diole geeignet, die ein Molekulargewicht von etwa 500 bis etwa 5000, beispielsweise von etwa 1000 bis etwa 3000 g/mol aufweisen. Als Diole eignen sich insbesondere die bereits oben aufgezählten Polyester, Polycarbonate oder Polylactone, oder Gemische aus zwei oder mehr davon, sofern sie mindestens zwei OH-Gruppen aufweisen.

Ebenfalls als Diole geeignete sind Polyetherdiole, wie sie durch Polyaddition von Ethylenoxid, Propylenoxid, Butylenoxid, Tetrahydrofuran, Styroloxid oder Epichlorhydrin mit sich selbst, z. B. in Gegenwart von basischen Katalysatoren oder durch Anlagerung dieser Verbindungen, gegebenenfalls im Gemisch oder nacheinander, an Startkomponenten mit reaktionsfähige Wasserstoffatomen erhältlich sind. Die Umsetzung erfolgt dabei wie bereits oben beschrieben. Die genannten Diole können auch im Gemisch aus zwei oder mehr der genannten Verbindungen eingesetzt werden.

Bei der Herstellung solcher Isocyanatgruppen tragenden Polymeren können in untergeordneten Mengen auch niedermolekulare Diole eingesetzt werden. Geeignete niedermolekulare Diole wurden bereits oben im Rahmen dieses Textes beschrieben.

In einer bevorzugten Ausführungsform der Erfindung werden Diisocyanatgruppen tragende Polymere eingesetzt, die unter Verwendung von Polyesterdiolen oder Polyetherdiolen oder deren Gemisch, gegebenenfalls zusammen mit niedermolekularen Diolen durch Reaktion mit Polyisocyanaten zu Isocyanatgruppen tragenden Polyurethanpräpolymeren umgesetzt wurden. Der Anteil an Polyetherdiolen in solchen Polyurethanpräpolymeren beträgt dabei beispielsweise etwa 10 bis etwa 100 mol-%, der Anteil an niedermolekularen Diolen, bezogen auf die Gesamtmenge der im Polyurethanpräpolymeren enthaltenen Diole, etwa 0 bis etwa 90 mol-%. In einer bevorzugten Ausführungsform der vorliegenden Erfindung beträgt das Verhältnis der Polyetherdiole zu den niedermolekularen Diolen etwa 0,2 : 1 bis 5 : 1, beispielsweise etwa 0,5 : 1 bis etwa 2 : 1.

Die erfindungsgemäßen Polyurethane können neben den aus den erfindungsgemäßen Sulfonsäureverbindungen stammenden Strukturelementen gemäß der allgemeinen Formel I noch weitere anionische oder kationische Gruppen aufweisen.

Unter "anionischen" oder "kationischen" Gruppen werden im Rahmen der vorliegenden Erfindung solche Gruppen verstanden, die sich durch einfache Neutralisations-, Hydrolyse- oder Quaternisierungsreaktionen in ionische hydrophile Gruppen überführen lassen. Beispiele für solche Gruppen sind Carbonsäuregruppen, Anhydridgruppen oder tertiäre Aminogruppen.

Zum Einführen von anionischen oder kationischen Gruppen geeignete Verbindungen sind beispielsweise Tris-(hydroxyalkyl)amine, N,N'-Bis(hydroxyalkyl)alkylamine, N-Hydroxyalkyldialkylamine, Tris-(aminoalkyl)-amine, N,N'-Bis(aminoalkyl)-alkylamine, N-Aminoalkyldialkylamine, wobei die Alkylreste und Alkandiyleinheiten dieser tertiären Amine unabhängig voneinander etwa 2 bis etwa 6 C-Atome aufweisen. Die genannten tertiäre Amine können beispielsweise mit Säuren, bevorzugt mit starken Mineralsäuren wie Phosphorsäuren, Schwefelsäure, Halogenwasserstoffsäure oder starken organischen Säuren oder durch Umsetzung mit geeigneten Quaternisierungsmitteln wie C₁ bis C₆-Alkylhalogeniden, z. B. Bromiden, Chloriden oder Jodiden, in die entsprechenden Ammoniumsalze überführt werden. Zur Einführung von anionischen Gruppen in das Polyurethan kommen üblicherweise aliphatische, cycloaliphatischen, araliphatische oder aromatischen Carbonsäuren in Betracht, die mindestens eine OH-Gruppe oder mindestens eine primäre oder sekundäre Aminogruppe aufweisen. Bevorzugt sind Dihydroxyalkylcarbonsäuren, insbesondere solche die etwa 3 bis etwa 10 C-Atome aufweisen. Solche Verbindungen werden beispielsweise in der US-A 3 412 054 beschrieben.

Ebenfalls geeignet sind entsprechende Dihydroxysulfonsäuren und Dihydroxyphosphonsäuren wie 2,3-Dihyroxypropanphosphonsäure. Darüber hinaus sind Dihydroxyverbindungen geeignet, die ein Molekulargewicht von etwa 500 bis etwa 10.000 g/mol aufweisen und mindestens zwei Carboxylgruppen aufweisen. Derartige Verbindungen sind beispielsweise aus der DE-A 3 911 827 bekannt.

Sofern bei der Herstellung der erfindungsgemäßen Polyurethane oder bei der Herstellung der oben beschriebenen Polyurethanpräpolymere Monomere mit ionischen Gruppen eingesetzt werden, kann deren Überführung in die ionische Form vor, während oder nach der Polyaddition erfolgen.

Bei der Herstellung der erfindungsgemäßen Polyurethane können neben den bereits genannten Verbindungen zusätzlich noch weitere Verbindungen vorliegen, die der Vernetzung oder einer Kettenverlängerung dienen. Bei diesen Verbindungen handelt es sich im allgemeinen um aliphatische oder cycloaliphatische Alkohole, Amine mit zwei oder mehr primären oder sekundären Aminogruppen sowie Verbindungen, die neben einer oder mehreren OH-Gruppen eine oder mehrere primäre oder sekundäre Aminogruppen tragen. Ebenfalls geeignet sind Verbindungen, die ein Gemisch aus zwei oder mehr der oben genannten funktionellen Gruppen aufweisen.

Polyamine mit zwei oder mehr primären oder sekundären Aminogruppen oder ein Gemisch dieser Gruppen werden vor allem dann eingesetzt, wenn eine Kettenverlängerung bzw. Vernetzung in Gegenwart von Wasser stattfinden soll, da Amine in der Regel schneller als Alkohole oder Wasser mit Polyisocyanaten reagieren. Dies ist häufig dann erforderlich, wenn wäßrige Dispersionen von vernetzten Polyurethanen oder von Polyurethanen mit hohem Molekulargewicht gewünscht werden.

Hierzu geeignete Amine sind im allgemeinen polyfunktionelle Amine mit einem Molekulargewicht von etwa 32 bis etwa 500 g/mol, vorzugsweise von etwa 60 bis etwa 300 g/mol, welche mindestens 2 primäre, 2 sekundäre oder eine primäre und eine sekundäre Aminogruppe aufweisen. Geeignete Amine werden im Rahmen des vorliegenden Textes weiter oben genannt. Gegebenenfalls können bei der Herstellung der erfindungsgemäßen Polyurethane noch weitere Verbindungen im Reaktionsgemisch vorliegen, welche die Vernetzung oder Verzweigung der entstehenden Polyurethanmoleküle zur Folge haben. Hierzu zählen beispielsweise Alkohole mit mehr als zwei OH-Gruppen wie Trimethylolpropan, Triethylolpropan, Glyzerin, Pentaerythrit oder die Gruppe der Zucker, beispielsweise Glucose, Sorbit oder Mannit oder oligomere Zucker wie Saccharose, Maltose oder Dextrose. Zum gleichen Zweck können bei der Reaktion auch Polyisocyanate eingesetzt werden, die mehr als zwei Isocyanatgruppen aufweisen. Geeignete Verbindungen sind beispielsweise Isocyanurate oder Biuret-Verbindungen, wie sie sich beispielsweise durch entsprechende Umsetzung von Hexamethylendiisocyanat erhalten lassen.

Zusätzlich können bei der Umsetzung zu den erfindungsgemäßen Polyurethanen im Reaktionsgemisch noch Verbindungen vorliegen, die gegenüber den im Reaktionsgemisch vorliegenden funktionellen Gruppen monofunktionell sind. Hierzu zählen beispielsweise Monoisocyanate, Monoalkohole und monoprimäre bzw. -sekundäre Amine. Im allgemeinen beträgt der Anteil solcher Verbindungen am gesamten Reaktionsgemisch maximal 10 mol-%, bezogen auf die gesamte Menge an Edukten. Solche monofunktionellen Verbindungen tragen in der Regel weitere funktionelle Gruppen wie olefinisch ungesättigte Gruppen oder Carboxylgruppen und dienen zu deren Einführung in das Polyurethan. Die genannten funktionellen Gruppen lassen dann eine weitere, polymeranaloge Umsetzung des Polyurethans zu. Geeignete Monomere sind beispielsweise Isopropyl-α,α-dimethylbenzyldiisocyanat (TMI) oder Ester von Acryl- oder Methacrylsäure wie Hydroxyethylacrylat oder Hydroxyethylmethacrylat.

Die einzelnen Komponenten werden in solchen Mengen eingesetzt, daß ein entsprechend gewünschtes Molekulargewicht erhalten wird. Die Auswahl der Mengenverhältnisse der einzelnen Komponenten zueinander und das daraus resultierende Molekulargewicht werden entsprechend den allgemeinen Regeln der Polyurethanchemie vorgenommen. In einer bevorzugten Ausführungsform der vorliegenden Erfindung werden daher die zur Herstellung des erfindungsgemäßen Polyurethans eingesetzten Edukte in einer solchen Menge eingesetzt, daß das Verhältnis von Isocyanatgruppen zu gegenüber Polyisocyanaten reaktionsfähige Gruppen etwa 0,5 : 1 bis etwa zwei: 1, beispielsweise etwa 0,8 : 1 bis 1,5 : 1 oder etwa 0,9 : 1 bis etwa 1,2 : 1 oder etwa 1 : 1 beträgt.

Das Molekulargewicht der erfindungsgemäßen Polymere, die mindestens eine Struktureinheit gemäß der allgemeinen Formel IV oder IVa aufweisen, beträgt in der Regel etwa 3000 bis etwa 5.000.000 g/mol, beispielsweise etwa 4000 bis etwa 1.000.000 oder etwa 10.000 bis etwa 100.000, je nach gewünschten Anwendungsgebiet.

Die erfindungsgemäßen Polymere können nur eine Struktureinheit gemäß der allgemeinen Formel IV oder IVa aufweisen, es ist jedoch ebensogut möglich, daß ein erfindungsgemäßes Polymeres zwei oder mehr Struktureinheiten der allgemeinen Formel IV oder IVa aufweist. In einer bevorzugten Ausführungsform der Erfindung weist das erfindungsgemäße Polyurethan etwa 1 bis etwa 1000, beispielsweise etwa 1 bis etwa 500, insbesondere etwa 2 bis etwa 100 Struktureinheiten der allgemeinen Formel IV oder IVa auf.

In einer weiteren Ausführungsform der vorliegenden Erfindung sind die erfindungsgemäßen Polyurethane thermoplastische Polyurethane, beispielsweise thermoplastische Blockcopolyurethane.

Die erfindungsgemäßen Blockcopolyurethane können mindestens ein Hartsegment und mindestens ein Weichsegment aufweisen. Bevorzugt weist ein erfindungsgemäßes Blockcopolyurethan eine Struktureinheit der allgemeinen Formel IV oder IVa im Hartsegment auf.

Die Herstellung der erfindungsgemäßen Polyurethane erfolgt in der Regel in einem Lösemittel oder lösemittelfrei, beispielsweise in der Schmelze. Geeignete Lösemittel sind beispielsweise Aceton, Methylethylketon oder cyclische Ether wie Tetrahydrofuran oder Dioxan sowie cyclische Ketone wie Cyclohexanon. Ebenfalls geeignet sind, je nach Anwendungsgebiet der Polyurethane, auch andere stark polare Lösemittel wie Dimethylformamid, N-Methylpyrrolidon, Dimethylsulfoxid oder Ethylenglykolacetat. Die genannten Lösemittel können gegebenenfalls mit aromatischen Verbindungen wie Toluol oder Xylol oder mit Estern wie Ethyl- oder Butylacetat vermischt werden. Bei der Herstellung können gegebenenfalls noch Katalysatoren anwesend sein. Geeignete Katalysatoren sind tertiäre Amine wie Triethylamin, Triethylendiamin, N-Methylpyridin oder N-Methylmorpholin, Metallsalze wie Zinnoctoat, Bleioctoat oder Zinkstearat oder organische Metallverbindungen wie Dibutylzinndilaurat. Die geeignete Katalysatormenge ist abhängig von der Wirksamkeit des in Frage kommenden Katalysators. Im allgemeinen hat es sich als zweckmäßig erwiesen, etwa 0,005 bis etwa 0,3 Gewichtsteile für jeweils 100 Gewichtsteile Polyurethan einzusetzen.

Die erfindungsgemäßen Verbindungen gemäß der allgemeinen Formel I sowie die unter Verwendung der erfindungsgemäßen Verbindungen hergestellten Polyadditions- bzw. Polykondensationsprodukte eignen sich beispielsweise zur Herstellung von wäßrigen Dispersionen, insbesondere von stabilen wäßrigen Dispersionen.

Wenn Verbindungen der allgemeinen Formel I oder daraus hergestellte Polyadditions- oder Polykondensationsprodukte als Dispergierhilfsmittel eingesetzt werden, so lassen sich daraus beispielsweise wäßrige Dispersionen erhalten, die eine ausgezeichnete Langzeitstabilität aufweisen. Je nach Einsatzzweck der so erhältlichen Dispersionen kann der Anteil an Verbindungen der allgemeinen Formel I oder der daraus hergestellten Polyadditions- und Polykondensationsprodukte an der gesamten wäßrigen Dispersion in weiten Bereichen variieren. Werden die erfindungsgemäßen Verbindungen beispielsweise als Dispergatoren zur Stabilisierung einer Dispersion, die einen nicht selbstdispergierbaren Feststoff enthält, eingesetzt, so kann die Einsatzmenge der erfindungsgemäßen Verbindungen in einem Bereich von etwa 0,01 bis etwa 40 Gew.-%, beispielsweise etwa 0,1 bis etwa 20 oder etwa 0,5 bis etwa 10 oder etwa 1 bis etwa 5 Gew.-% liegen. Der Anteil an Feststoffen in einer solchen Dispersion kann dabei über einen weiten Bereich variieren. Je nach Einsatzzweck, lassen sich so unter Verwendung der erfindungsgemäßen Verbindungen Dispersionen erhalten, die einen Festkörpergehalt von bis zu etwa 99 Gew.-% aufweisen. Insbesondere dann, wenn solche Dispersionen zur Beschichtung von Oberflächen eingesetzt werden sollen, weisen sie vorzugsweise einen Festkörpergehalt von etwa 30 bis etwa 95 Gew.-%, beispielsweise etwa 40 bis etwa 90 oder etwa 50 bis etwa 80 Gew.-% auf.

Gegenstand der vorliegenden Erfindung sind daher auch wäßrige Dispersionen, mindestens enthaltend eine erfindungsgemäße Sulfonsäureverbindung.

Im Rahmen einer weiteren bevorzugten Ausführungsform eignen sich die erfindungsgemäßen Verbindungen jedoch auch als alleiniger Bestandteil einer solchen Dispersion, insbesondere als diskontinuierliche Phase einer wäßrigen Dispersion. Derartige Dispersionen lassen sich beispielsweise als Beschichtungsmittel zur Herstellung von Oberflächenbeschichtungen einsetzen. Im Rahmen eines solchen Einsatzes ist es vorteilhaft, wenn als erfindungsgemäße Verbindung eine Verbindung eingesetzt wird, die nach Entfernen der kontinuierlichen Phase eine Oberflächenbeschichtung ergibt, die den Wünschen des Anwenders entspricht. Im Rahmen eines solchen Einsatzes ist es daher erfindungsgemäß bevorzugt, wenn als erfindungsgemäße Verbindung eine Verbindung mit einem Molekulargewicht von mindestens etwa 1000 eingesetzt wird.

Im Rahmen der vorliegenden Erfindung sind insbesondere solche wäßrigen Dispersionen bevorzugt, die mindestens eines der obengenannten erfindungsgemäßen Polyadditions- oder Polykondensationsprodukte, insbesondere mindestens eines der erfindungsgemäßen Polyurethane aufweisen, besonders bevorzugt mindestens 20 Gew.-% eines erfindungsgemäßen Polyurethans.

Die erfindungsgemäßen wäßrigen Dispersionen können neben Wasser und einer der obengenannten erfindungsgemäßen Verbindungen, oder einem Gemisch aus zwei oder mehr davon, noch eine oder mehrere weitere Verbindungen enthalten.

Wenn die erfindungsgemäße wäßrige Dispersion als Oberflächenbeschichtungsmittel eingesetzt werden soll, so kann die Dispersion beispielsweise mindestens ein Polymeres enthalten, das durch Polymerisationen von Monomeren mit ethylenisch ungesättigten Doppelbindungen erhältlich ist. Geeignete Monomere sind beispielsweise Acrylsäure, Methacrylsäure, Acrylnitril, Acrylsäureester oder Methacrylsäureester wie sie durch Veresterung vom Acrylsäure oder Methacrylsäure mit Methanol, Ethanol, n-Butanol, Isobutanol oder 2-Ethylhexylalkohol erhältlich sind, Vinylester von Carbonsäuren mit 1 bis 16 C-Atomen oder 1-Alkene wie Ethylen, Propylen, Butylen oder Styrol. Derartige Polymerisate können beispielsweise bereits in dispergierter oder zumindest polymerisierter Form der erfindungsgemäßen Dispersion zugemischt werden. Es ist jedoch ebenso möglich, die genannten Polymeren in der erfindungsgemäßen wäßrigen Dispersion herzustellen. Hierbei können die jeweiligen Verbindungen und Reaktionsbedingungen so gewählt werden, daß beispielsweise zumindest ein Teil der in der Dispersion erzeugten Polymeren im Sinne einer Pfropfreaktion an die in der Dispersion vorliegenden erfindungsgemäßen Verbindungen angelagert werden. Die Herstellung entsprechender Polymerisate erfolgt nach dem Fachmann bekannten Methoden wie sie beispielsweise in D.C. Blackley, Emulsionpolymerization - Theory and Practice, London, Applied Science Publishers, 1975 oder in H. Warson, Application of Synthetic Resin Emulsions, London, Benn Publishers, 1972 oder in I. Piirma, Emulsionpolymerization, New York, Academic Press Inc. 1982, beschrieben sind.

Die erfindungsgemäßen Verbindungen können weiterhin noch Zusatzstoffe wie organische Lösemittel, Pigmente, Farbstoffe, Emulgatoren, Tenside, Verdicker, Stabilisatoren, Verlaufshilfsmittel, Füllstoffe, Sedimentationsinhibitoren, Flammschutzmittel, UV-Stabilisatoren oder Antioxidantien enthalten.

Geeignete Lösemittel sind beispielsweise Aceton, Methylethylketon, Tetrahydrofuran, Dimethylformamid, Dimethylacetamid, Dioxan, Ethylacetat und dergleichen, oder einem Gemisch aus zwei oder mehr davon. Die erfindungsgemäßen Dispersionen können die organischen Lösemittel in einer Menge von bis zu etwa 20 Gew.-%, vorzugsweise bis zu etwa 10 Gew.-% enthalten.

Als Verdicker eignen sich beispielsweise Polymerisate von hydrophilen, radikalisch polymerisierbaren Monomeren wie Acrylsäure, Methacrylsäure, Polyvinylpyrrolidon oder Verdicker auf Basis von Cellulose- oder Stärkederivaten wie Carboxymethylcellulose, Carboxyethylcellulose, Hydroxyethylcellulose, Hydroxypropylcellulose, Hydroxyethylstärke, Hydroxypropylstärke und dergleichen. Die genannten Verdicker können jeweils einzeln oder als Gemisch aus zwei oder mehr davon in den erfindungsgemäßen Dispersionen vorliegen.

Geeignete Füllstoffe oder Pigmente sind beispielsweise Titandioxid, Antimonoxid, Zinkoxid, basisches Bleicarbonat, basisches Bleisulfat, Bariumcarbonat, Porzellanmehl, Ton, Aluminiumsilikat, Siliziumdioxid, Magnesiumcarbonat, Magnesiumsilikat oder Calciumcarbonat. Als farbige Pigmente können beispielsweise Cadmiumgelb, Cadmiumrot, Ruß, Phthalocyaninblau, Chromgelb, Toluidinrot und hydratisiertes Eisenoxid benutzt werden.

Die Herstellung der erfindungsgemäßen Dispersionen erfolgt nach allgemein üblichen, dem Fachmann bekannten Methoden. Geeignete Methoden sind beispielsweise in Kunststoffhandbuch, Nr. 7, Polyurethane, Karl Hanser Verlag, 1993, beschrieben.

Die erfindungsgemäßen wäßrigen Dispersionen können insbesondere als Oberflächenbeschichtungsmittel eingesetzt werden. Hierbei können sie mit einer Vielzahl an Substraten in Verbindung gebracht werden. Beispiele für geeignete Substrate sind Holz, Metall, Glas, Textilien, Leder, Papier, Kunststoffe und dergleichen. Der Auftrag der erfindungsgemäßen wäßrigen Dispersionen kann durch beliebige, konventionelle Methoden wie Tauchen, Sprühen, Rakeln, Pinselauftrag oder dergleichen erfolgen.

Die vorliegende Erfindung betrifft weiterhin die Verwendung einer Verbindung gemäß der allgemeinen Formel I oder einer Polyadditions- oder Polykondensationsverbindung, die eine Struktureinheit gemäß der allgemeinen Formel IV oder IVa aufweist, als Netzmittel, Dispergierhilfsmittel, Tensid, Haftvermittler, Hilfsmittel in galvanischen Bädern, Säurekatalysator bei chemischen Synthesen oder als Härterkomponente in Beschichtungsmitteln.

Die Erfindung wird nachfolgend durch Beispiele näher erläutert.

### Beispiele

### Beispiel 1:

In einem Rührkolben mit Temperaturregelung, Thermometer und Zulaufgefäß wurden 106 g Isopropanol und 158 g 2-(2-Aminoethoxy)ethanol (1,5 mol) vorgelegt und bei Rückflußtemperatur gehalten. Zu diesem Gemisch wurde innerhalb eines Zeitraums von etwa 30 min eine klare Lösung von 310 g 2-Acrylamido-2-methylpropansulfonsäure (1,5 mol), 151,8 g Triethylamin in 360 g Isopropanol zugetropft. Das Reaktionsgemisch wurde für weitere 60 min bei dieser Temperatur gerührt und dann abkühlen gelassen. Das Reaktionsprodukt wurde als Vorstufe 1 bezeichnet.

360 g der Vorstufe 1 wurden vorgelegt und unter Rühren innerhalb von 30 Minuten mit einer Lösung von 42 g Hexamethylendiisocyanat in 42 g Aceton bei Raumtemperatur versetzt. Es erfolgte eine leicht exotherme Reaktion. Anschließend wurde noch für einen Zeitraum von etwa 20 Minuten bei 60 °C nachgerührt. Die so erhaltenen Lösung wurde unter Vakuum am Rotationsverdampfer eingedampft. Es resultierte eine allmählich kristallisierende, ölige Substanz. Als Hauptbestandteil wurde durch H-NMR-Analyse die folgende Struktur (Formel Ic) identifiziert:

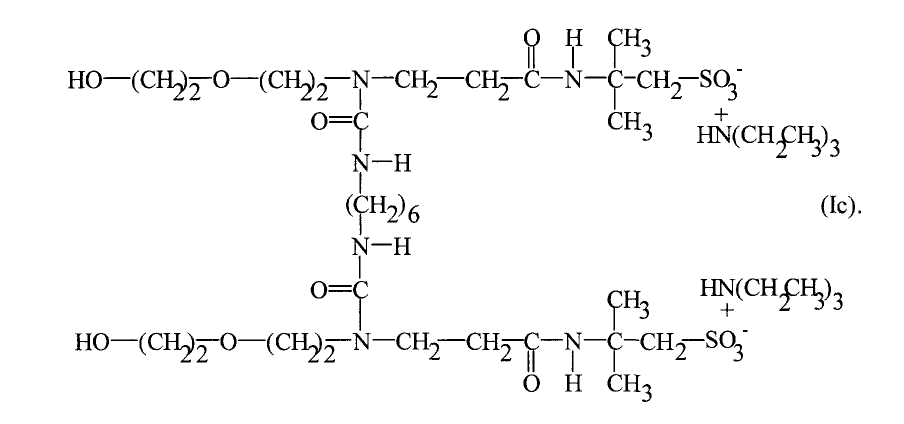

### Beispiel 2:

In einem Rührkolben mit Temperaturregelung, Thermometer und Zulaufgefäß wurden 106 g Isopropanol und 158 g 2-(2-Aminoethoxy)ethanol (1,5 mol) vorgelegt und bei Rückflußtemperatur gehalten. Zu diesem Gemisch wurde innerhalb eines Zeitraums von etwa 30 min eine klare Lösung von 310 g 2-Acrylamido-2-methylpropansulfonsäure (1,5 mol), 60 g Natriumhydroxid in einem Gemisch aus 200 g Isopropanol und 200 g Wasser zugetropft. Das Reaktionsgemisch wurde für weitere 60 min bei dieser Temperatur gerührt und dann abkühlen gelassen. Das Reaktionsprodukt wurde als Vorstufe 1 bezeichnet.

345 g der Vorstufe 1 wurden vorgelegt und unter Rühren innerhalb von 30 Minuten mit einer Lösung von 42 g Hexamethylendiisocyanat in 42 g Aceton bei Raumtemperatur versetzt. Es erfolgte eine leicht exotherme Reaktion. Anschließend wurde noch für einen Zeitraum von etwa 20 Minuten bei 60 °C nachgerührt. Die so erhaltenen Lösung wurde unter Vakuum am Rotationsverdampfer eingedampft. Es resultierte eine allmählich kristallisierende, ölige Substanz. Als Hauptbestandteil wurde durch H-NMR-Analyse die folgende Struktur (Formel Id) identifiziert:

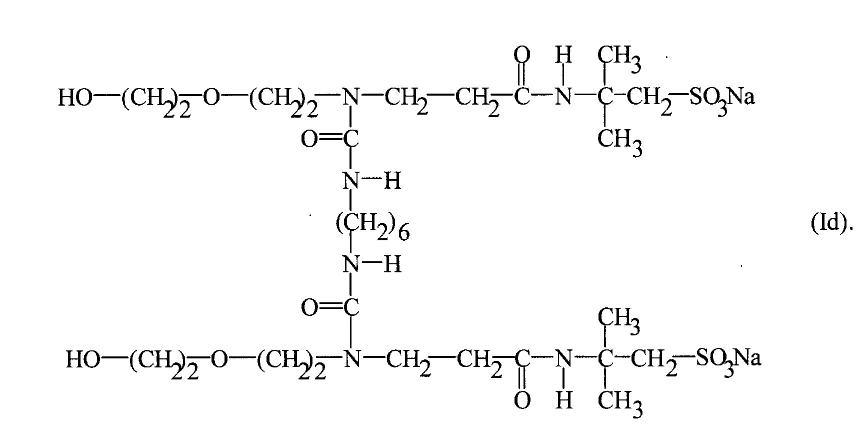

### Beispiel 3:

In einer Rührapparatur wurden 103,5 g (0,5 mol) 2-Acrylamido-2-methylpropansulfonsäure und 0,5 g 4-Methoxyphenol in 100 g Wasser vorgelegt. Anschließend wurden 20 g (0,5 mol) Natriumhydroxid in 60 g Wasser bei maximal 30 °C zugetropft. Nach Zugabe von 52,65 g (0,45 mol) 6-Amino-1-hexanol in 60 g Wasser wurde für 8 Stunden auf unter 20 °C erhitzt (Badtemperatur). Nach Abkühlen auf Raumtemperatur wurde mit 49,3 g (0,5 mol) konzentrierter Salzsäure neutralisiert. Nach Entfernen des Lösemittels wurde der Rückstand in 53 g warmem Ethanol gelöst wobei ausfallendes Natriumchlorid abfiltriert wurde. Nach Entfernung des Lösemittels wurde das Produkt als braune, hochviskose Flüssigkeit erhalten.

### Beispiel 4:

### Präpolymeres mit einem Michael-Addukt aus 6-Amino-1-hexanol und 2-Acrylamido-2-methylpropansulfonsäure

75 g (0,3 mol) 4,4'-Diphenylmethandiisocyanat, 32 g (0,2 mol) 2-Butyl-2-ethyl-1,3-propandiol und 0,02 g Dibutylzinndilaurat als Katalysator wurden in 107,0 g Tetrahydrofuran vorgelegt und bei 60 °C zur Reaktion gebracht. Die Reaktion wurde so lange durchgeführt, bis der NCO-Gehalt von 11,78 % auf 3,93 % gefallen war. Anschließend wurden 64,8 g (0,2 mol) des Michael-Adduktes aus Beispiel 3 in 60 g Tetrahydrofuran zugegeben und es wurde auf 80 °C erhitzt, bis die Reaktion vollständig abgelaufen war. Es entstand eine bräunlich trübe Lösung von hoher Viskosität.

### Beispiel 5:

### Präpolymeres mit Polypropylenglykol und einem Michael-Addukt Aus 6-Amino-1-Hexanol und 2-Acrylamido-2-Methylpropansulfonsäure

13,3 g (0,06 mol) Isophorondiisocyanat, 18 g (0,03 mol) Polypropylenglykol (Molekulargewicht: 600) und 0,02 g Dibutylzinndilaurat als Katalysator wurden in 47 g einer Mischung aus Dimethylformamid und Tetrahydrofuran im Verhältnis 1: 1,4 vorgelegt und auf 80 °C erhitzt. Der NCO-Gehalt sank während dieser Zeit von 6,44 % auf 3,22 % . Anschließend wurde eine Lösung aus 19,4 g (0,06 mol) eines Michael-Adduktes (Beispiel 3), gelöst in 30 g einer Mischung aus Dimethylformamid und Tetrahydrofuran im Verhältnis 1: 1,4, hinzugefügt. Es wurde weiter bei 80 °C gerührt, bis der NCO-Gehalt auf 0 % gefallen war. Eine während der Reaktion auftretende Trübung wurde durch Zugabe von 10 g Dimethylformamid beseitigt.

### Beispiel 6:

### Herstellung eines Polymere in der Schmelze

137,5 g (0,25 mol) CAPA 200 (Polycaprolactondiol). 29,5 g (0,25 mol) Hexandiol, 53 g (0,25 mol) AMPS und 0,5 g TEMPOL (Polymerisationsinhibitor) wurden bei 100 °C gerührt. Innerhalb von 10 min wurden bei 100 °C 25 g Triethylamin zugetropft. Nach weiteren 10 min Rühren wurde der Ansatz klar. Bei 80°C wurden dann innerhalb von 15 min 15,25 g (0,25 mol) Ethanolamin zugetropft wobei anschließend für weitere 60 min bei 80°C gerührt wurde. Im Anschluß wurden 333 g (1,5 mol) Isophorondiisocyanat innerhalb von 20 min zugetropft. Nach dem Abkühlen erhielt man ein sulfonsäuremodifiziertes Polyurethan als wachsartigen Feststoff.

### Beispiel 7:

In einem Rührkolben mit Thermometer und Zulaufgefäß wurden 100 g Methylethylketon, 1100 g Polycaprolacton (CAPA 200, 1,0 mol), 208 g 2-Acrylamido-2-methylpropansulfonsäure (AMPS, 1,0 mol) und 0,5 g Hydrochinonmonomethylether unter rühren auf 60 °C erwärmt. Es bildete sich eine trübe Suspension in die unter kräftigem Rühren 190 g Tributylamin (1 mol + 5g) innerhalb von 20 Minuten zugetropft wurden. Die Reaktion verlief exotherm wobei die Temperatur auf etwa 80 °C anstieg. Das Reaktionsgemisch wurde 20 Minuten bei dieser Temperatur gehalten. Es bildete sich eine leicht trübe Lösung in die bei etwa 80 °C 150 g Diethanolamin (1 mol) zugetropft wurden. Der Ansatz wurde unter Rückfluß etwa eine Stunde weiter gerührt. Anschließend wurde 1 g Dibutylzinndilaurat zugegeben und anschließend unter Rückfluß während etwa 20 Minuten 336 g Hexamethylendiisocyanat (2 mol) langsam zugetropft. Nach Abschluß der exothermen Reaktion wurde noch eine Stunde bei 80 °C gehalten. Es resultierte eine leicht trübe viskose Lösung einer oligomeren Urethanverbindung, die in statistischer Verteilung Sulfonsäure/Tributylaminsalz-Gruppen und terminale OH-Gruppen aufwies. Die Lösung war beliebig mit Wasser verdünnbar.

### Beispiel 8:

In einer Rührapparatur wurden 103,5 g (0,5 mol) 2-Acrylamido-2-methylpropansulfonsäure und 0,5 g 4-Methoxyphenol in 100 g Wasser gelöst. Anschließend wurden 20 g (0,5 mol) Natriumhydroxyd, in 60 g Wasser gelöst, bei maximal 30 °C zugetropft. Anschließend wurden 59,85 g (0,45 mol) Diisopropanolamin und 60 g Wasser zugegeben und das Gemisch auf 20 °C erwärmt. Nach 8 Stunden Reaktionszeit wurde auf Raumtemperatur abgekühlt und mit 49,3 g (0,5 mol) konzentrierter Salzsäure neutralisiert. Anschließend wurde das Lösemittel entfernt und der Rückstand in 53 g warmem Ethanol gelöst. Das dabei ausfallende Natriumhydroxid wurde abgetrennt. Das Filtrat kristallisierte beim Abkühlen aus.

### Beispiel 9:

17,0 g des Michael-Adduktes aus Beispiel 7 wurden mit 66,6 g (0,3 mol) Isophorondiisocyanat und 0,5 g Dibutylzinndilaurat in 31 g N-Methylpyrrolidon bei 100 °C unter Rühren zur Reaktion gebracht. Als die Lösung einen NCO-Gehalt von 9,83% erreicht hatte, wurden 48,0 g (0,3 mol) 2-Butyl-2-ethyl-1,3-propandiol und 0,1 g Dibutylzinndilaurat zugegeben. Das Reaktionsgemisch wurde bis zum Ende der Umsetzung auf 100 °C gehalten. Hierbei entstand ein Produkt, das nach Entfernen des Lösemittels in Tetrahydrofuran, Toluol und Methanol löslich war.

### Beispiel 10:

### Herstellung einer Polyurethandispersion

### Herstellung des Michael-Addukts:

227,7 g (1,1 mol) Acrylamido-2-methylpropansulfonsäure (AMPS) und 1,0 g Hydrochinonmonomethylether wurden in 200 g Wasser gelöst. Anschließend wurde unter Eiskühlung eine Lösung von 44,2 g (1,1 mol) Natriumhydroxid in 150 g Wasser so zugegeben, daß die Temperatur 30 °C nicht überschritt. Anschließend wurden 118 g (1,0 mol) Diisopropanolamin, gelöst in 50 g Wasser zugegeben und der Ansatz bei 120 °C 8 Stunden gerührt. Es entstand eine klare Reaktionslösung mit leicht gelblicher Färbung.

Zur genauen Bestimmung der zur Neutralisation benötigten Menge an Salzsäure wurde eine Probe der Reaktionslösung mit 1m HCl titriert. Die auf den gesamte Ansatz berechnete äquivalente Menge an HCl (37 %ig) wurde langsam zugegeben. Anschließend wurde das Wasser so weit abdestilliert, bis ein zäher Brei entstand. Dieser wurde in 700 ml Ethanol warm gelöst. Das dabei ausfallende NaCl wurde abfiltriert. Beim Abkühlen des Filtrats kristallisierte das Endprodukt langsam aus.

### Herstellung der Polyurethandispersion:

27,9 g (0,0 894 mol) des Michael-Addukts, 70 g N-Methylpyrrolidon und 133 g (0,0665 mol) eines Polyesterpolyols aus Adipinsäure, Hexandiol-1,6 und Neopentylglykol mit einer OH-Zahl von 56 wurden in einem Rührkolben vorgelegt. Zu diesem Gemisch wurden bei 50 °C 42 g (0,1889 Mol) Isophorondiisocyanat und 0,2 ml Dibutylzinndilaurat gegeben und 60 Minuten bei 80 °C gerührt. Anschließend wurde mit 200 g Aceton verdünnt, mit 8,6 g (0,085 Mol) Triethylamin neutralisiert und durch Zugabe von 530 g Wasser dispergiert. Nach Destillation des Acetons erhielt man eine feinteiligen, stabile Polyurethandispersion mit einem Feststoffgehalt von 40 Gew.-%.

## Patentansprüche

1. Sulfonsäureverbindung der allgemeinen Formel I 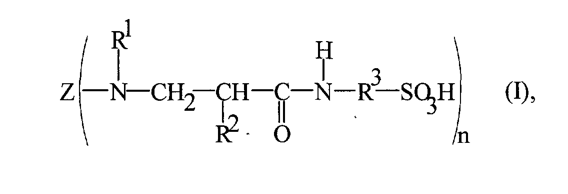 worin 1 < n ≤ 2, mindestens einer der Reste R¹ für R⁴-QH, R⁴-Q-(X-O-)ₘ X-QH oder R⁴-O-Y-QH steht, wobei Q für O (Sauerstoff), NH, NR² oder S, R⁴ für einen linearen oder verzweigten, gesättigten oder ungesättigten Alkylrest mit 2 bis 44 C-Atomen, X für einen gegebenenfalls aromatisch substituierten Alkylrest mit 2 bis 14 C-Atomen, Y für einen Polyester, ein Polyamid, ein Polycarbonat, ein Polyurethan oder ein Polylacton mit einem Molekulargewicht M_{w} von 150 bis 5000 und m für einen Wert von 1 bis 300 steht, die Reste R² unabhängig voneinander jeweils für H oder einen linearen oder verzweigten, gesättigten oder ungesättigten aliphatischen Kohlenwasserstoffrest mit 1 bis etwa 20 C-Atomen, einen gesättigten oder ungesättigten, gegebenenfalls substituierten cycloaliphatischen Kohlenwasserstoffrest mit 4 bis etwa 20 C-Atomen, einen gegebenenfalls substituierten aliphatischen Kohlenwasserstoffrest mit 6 bis etwa 20 C-Atomen oder einen gegebenenfalls substituierten aromatischen Kohlenwasserstoffrest mit 6 bis 18 C-Atomen, die Reste R³ für einen linearen oder verzweigten, gesättigten oder ungesättigten Alkylrest mit 2 bis 44 C-Atomen oder einen gesättigten oder ungesättigten Cycloalkylrest mit 6 bis 44 C-Atomen stehen, Z für einen linearen oder verzweigten, gesättigten oder ungesättigten gegebenenfalls substituierten Alkylrest mit 8 bis 44 C-Atomen, einen gegebenenfalls substituierten Cycloalkylrest mit 4 bis 44 C-Atomen, einen gegebenenfalls substituierten araliphatischen Kohlenwasserstoffrest mit 6 bis 40 C-Atomen oder einen Polyether, einen Polyester, ein Polyamid, ein Polycarbonat, ein Polyurethan oder ein Polylacton mit einem Molekulargewicht M_{w} von 150 bis 10000, wobei Z über geeignete fünktionelle Gruppen mit dem Gesamtmolekül verbunden ist, oder ein Teil- oder Vollsalz davon.

2. Sulfonsäureverbindung der allgemeinen Formel I 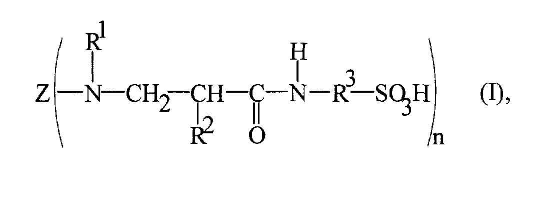 worin n für eine Zahl von mehr als 2 bis 100000, die Reste R¹ jeweils unabhängig voneinander für H, CH₃, einen linearen oder verzweigten, gesättigten oder ungesättigten Alkylrest mit 2 bis 44 C-Atomen oder einen Cykloalkylrest mit 4 bis 44 C-Atomen oder einen aromatischen Kohlenwasserstoffrest mit 6 bis 10 C-Atomen, R⁴-QH, R⁴-Q-(X-O-)ₘX-QH oder R⁴-O-Y-QH stehen, wobei Q für O, NH, NR2 oder S, R4 für einen linearen oder verzweigten, gesättigten oder ungesättigten Alkylrest mit 1 bis 44 C-Atomen, und X, Y, m, R², R³ und Z die in Anspruch 1 genannte Bedeutung aufweisen.

3. Sulfonsäureverbindung nach Anspruch 1, gekennzeichnet durch eines oder mehrere der folgenden Merkmale:
- einer der Reste R² steht für H oder CH₃,
- mindestens einer der Reste R³ steht für einen linearen oder verzweigten aliphatischen Kohlenwasserstoffrest mit 3 bis 8 C-Atomen,
- n steht für eine Zahl von 1,8 bis 2.

4. Sulfonsäureverbindung nach Anspruch 2, gekennzeichnet durch eines oder mehrere der folgenden Merkmale:
- einer der Reste R² steht für H oder CH₃,
- mindestens einer der Reste R³ steht für einen linearen oder verzweigten aliphatischen Kohlenwasserstoffrest mit 3 bis 8 C-Atomen,
- n steht für eine Zahl von mehr als 2 bis 6.

5. Sulfonsäureverbindung der allgemeinen Formel I 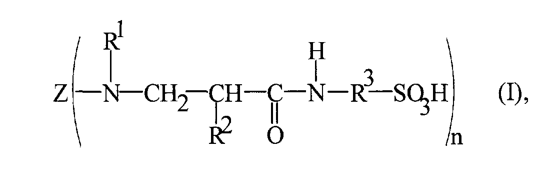 worin n gleich 1 ist, R² für H oder einen linearen oder verzweigten, gesättigten oder ungesättigten aliphatischen Kohlenwasserstoffrest mit 1 bis 20 C-Atomen, einen gesättigten oder ungesättigten, gegebenenfalls substituierten cycloaliphatischen Kohlenwasserstoffrest mit 4 bis 20 C-Atomen oder einen gegebenenfalls substituierten araliphatischen Kohlenwasserstoffrest mit 6 bis 40 C-Atomen steht, R³ für einen linearen oder verzweigten, gesättigten oder ungesättigten aliphatischen Kohlenwasserstoffrest mit 1 bis 20 C-Atomen oder einen cycloaliphatischen Kohlenwasserstoffrest mit 4 bis 20 C-Atomen oder einen gegebenenfalls substituierten aromatischen Kohlenwasserstoff mit 6 bis 18 C-Atomen steht, R¹ und Z jeweils unabhängig voneinander für R⁴-QH, R⁴-Q-(X-O-)ₘX-QH oder R⁴-O-Y-QH stehen, wobei Q für O (Sauerstoff), NH, NR⁴ oder S, R⁴ für einen linearen oder verzweigten, gesättigten oder ungesättigten, gegebenenfalls aromatisch substituierten Alkylrest mit 2 bis 44 C-Atomen, X für einen gegebenenfalls aromatisch substituierten Alkylrest mit 2 bis 14 C-Atomen, Y für ein durch Polymerisation, Polyaddition oder Polykondensation erhältliches Polymeres mit einem Molekulargewicht M_{w} von 150 bis 5000 und m für einen Wert von 1 bis 300 steht und wobei nicht beide Reste R¹ und Z gleichzeitig für CH₂-CH₂-OH stehen, oder ein Salz davon.

6. Sulfonsäureverbindung nach Anspruch 5, gekennzeichnet durch eines oder mehrere der folgenden Merkmale:
- R² steht für H oder CH₃,
- R³ steht für einen linearen oder verzweigten aliphatischen Kohlenwasserstoffrest mit 3 bis 8 C-Atomen,
- R⁴ steht für einen linearen oder verzweigten Alkylrest mit 2 bis 44 C-Atomen,
- X steht für CH₂-CH₂ oder CH(CH3)-CH2 oder CH₂-CH(CH₃),
- Y steht für einen aliphatischen Polyester mit einem Molekulargewicht M_{w} von 150 bis 300 und
- m steht für einen Wert von 1 bis 200.

7. Polyadditionsprodukt oder Polykondensationsprodukt, dadurch gekennzeichnet, daß es mindestens eine Struktureinheit gemäß der allgemeinen Formel IV 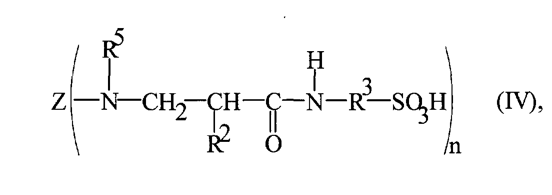 aufweist, worin n für eine Zahl von 1 bis 1000000 steht, die Reste R⁵ unabhängig voneinander für R⁴-O-, R⁴-Q-(X-O-)ₘX-Q- oder R⁴-O-Y-O- stehen, wobei Q, R⁴, X, Y, m, R², R³ und Z die in Anspruch 1 genannte Bedeutung aufweisen, oder ein Halb- oder Vollsalz davon, oder eine Struktureinheit gemäß einem der Ansprüche 5 oder 6.

8. Polyadditionsprodukt nach Anspruch 7, dadurch gekennzeichnet, daß es ein Polyurethan ist.

9. Polyurethan nach Anspruch 8, dadurch gekennzeichnet, daß es als Blockcopolyurethan aufgebaut ist und mindestens ein Hartsegment und mindestens ein Weichsegment aufweist.

10. Polyurethan nach einem der Ansprüche 8 oder 9, dadurch gekennzeichnet, daß es die Struktureinheit gemäß Anspruch 7 im Hartsegment aufweist.

11. Verfahren zur Herstellung eines Polyadditions- oder Polykondensationsprodukts gemäß einem der Ansprüche 7 bis 10, dadurch gekennzeichnet, daß eine Verbindung der allgemeinen Formel I, worin R¹, R², R³ und Z wie in Anspruch 1 definiert sind, und eine Verbindung oder ein Gemisch aus zwei oder mehr Verbindungen, die zusammen mit der Verbindung der allgemeinen Formel I unter Erhalt eines Polyadditions- oder Polykondensationsprodukts reagieren können, unter geeigneten Reaktionsbedingungen umgesetzt werden.

12. Verfahren zur Herstellung einer Sulfonsäureverbindung nach einem der Ansprüche 1 bis 6, dadurch gekennzeichnet, daß eine Verbindung der allgemeinen Formel II
R¹-NH-Z³ (II),
worin Z³ für H oder Z steht, R¹ und Z jeweils unabhängig voneinander für R⁴-Q-, R⁴-Q-(X-O-)ₘX-Q- oder R⁴-O-Y-Q- stehen, wobei Q für O (Sauerstoff), NH, NR⁴ oder S, R⁴ für einen linearen oder verzweigten, gesättigten oder ungesättigten, gegebenenfalls aromatisch substituierten Alkylrest mit 2 bis 44 C-Atomen, X für einen gegebenenfalls aromatisch substituierten Alkylrest mit 2 bis 14 C-Atomen, Y für ein durch Polymerisation, Polyaddition oder Polykondensation erhältliches Polymeres mit einem Molekulargewicht M_{w} von 150 bis 5000 und m für einen Wert von 1 bis 300 steht und wobei nicht beide Reste R¹ und Z gleichzeitig für CH₂-CH₂-OH stehen, und eine Verbindung der allgemeinen Formel III 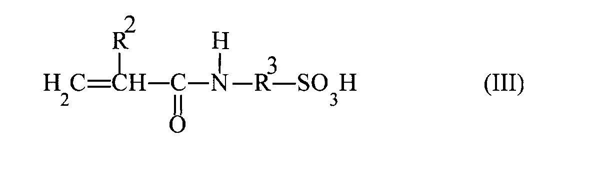 im Sinne einer Michael-Addition miteinander umgesetzt werden.

13. Verwendung einer Sulfonsäureverbindung gemäß einem der Ansprüche 1 bis 6 oder einer Sulfonsäureverbindung hergestellt gemäß Anspruch 12 zur Herstellung von Polyadditions- oder Polykondensationsprodukten.

14. Verwendung nach Anspruch 13, dadurch gekennzeichnet, daß es sich bei den Polyadditions- und Polykondensationsprodukten um Polyurethane, Polyester, Polyether, Polycarbonate, Polyetherester, Polyamide, Polyesteramide, Polyetheramide, Polylactone oder Polylactame handelt.

15. Verwendung von Sulfonsäureverbindungen gemäß einem der Ansprüche 1 bis 6, oder einer Sulfonsäureverbindung hergestellt gemäß Anspruch 12, oder von Polyadditions- und Polykondensationsverbindungen gemäß einem der Ansprüche 7 bis 10, oder einer Polyadditions- und Polykondensationsverbindungen hergestellt gemäß Anspruch 11 als Netzmittel, Dispergierhilfsmittel, Tensid, Haftvermittler, Hilfsmittel in galvanischen Bädern, Säurekatalysator bei chemischen Synthesen oder als Härterkomponente in Beschichtungsmitteln.

16. Wäßrige Dispersion, mindestens enthaltend eine Sulfonsäureverbindung gemäß einem der Ansprüche 1 bis 6, oder eine Sulfonsäureverbindung hergestellt gemäß Anspruch 12, oder eine Polyadditions- oder Polykondensationsverbindungen gemäß Anspruch 7, oder ein Polyurethan gemäß einem der Ansprüche 8 bis 10, oder einer Polyadditions- und Polykondensationsverbindungen hergestellt gemäß Anspruch 11.

17. Wäßrige Dispersion gemäß Anspruch 16, dadurch gekennzeichnet, daß sie mindestens 20 Gew.-% eines Polyurethans nach einem der Ansprüche 8 bis 10 enthält.
